# EUROPÄISCHE PATENTSCHRIFT

(11) **EP 1 776 252 B1**
(45) Veröffentlichungstag und Bekanntmachung des Hinweises auf die Patenterteilung: **17.09.2008**
(21) Anmeldenummer: 05759657.9
(22) Anmeldetag: 20.06.2005
(51) Int. Cl.: B60N 2/12

(54) **KRAFTFAHRZEUGSITZ**
MOTOR VEHICLE SEAT
SIÈGE DE VEHICULE À MOTEUR

(30) Priorität: 16.07.2004 DE 202004011388 U
(43) Veröffentlichungstag der Anmeldung: 25.04.2007
(73) Patentinhaber: Brose Fahrzeugteile GmbH & Co. KG, Coburg, 96450 Coburg (DE)
(72) Erfinder: HOFMANN, Jochen, 96257 Marktgraitz (DE); KRÖNER, Gregor, 96120 Bischberg (DE); QUAST, Ingo, 96450 Coburg (DE)
(74) Vertreter: Baumgärtel, Gunnar
(86) Internationale Anmeldenummer: PCT/DE2005/001123
(87) Internationale Veröffentlichungsnummer: WO 2006/007809

(56) Entgegenhaltungen:
- EP-A- 0 683 066
- WO-A-00/55002
- WO-A-97/03861
- WO-A-98/25785
- US-A- 5 855 349

## Beschreibung

Die Erfindung betrifft einen Kraftfahrzeugsitz nach dem Oberbegriff des Anspruchs 1.

Ein derartiger Kraftfahrzeugsitz umfasst ein Sitzgestell; eine Rückenlehne, die an dem Sitzgestell gelagert und aus ihrer jeweiligen, im Wesentlichen aufrechten Gebrauchsposition heraus (in der sie zum Abstützen des Rückens eines Fahrzeuginsassen eingestellt ist) in Richtung auf eine Sitzfläche des Sitzgestells vorklappbar ist; eine Schienenlängsführung, mit der das Sitzgestell zur Einstellung der Sitzlängsposition in Schienenlängsrichtung bewegbar ist; eine Feststellvorrichtung mit mindestens einem beweglich gelagerten Sperrelement zum Arretieren der Schienenlängsführung in einer zuvor eingestellten Sitzlängsposition, der eine entlang der Schienenlängsrichtung erstreckte Verriegelungsschiene mit einer Mehrzahl in Schienenlängsrichtung hintereinander angeordneter Verriegelungsstellen zugeordnet ist, in die das Sperrelement zur Verriegelung der Schienenlängsführung eingreifen kann; einen gemeinsam mit dem Sitzgestell in Schienenlängsrichtung bewegbaren Koppelmechanismus zwischen der Feststellvorrichtung und der Rückenlehne, der die Feststellvorrichtung entriegelt, wenn die Rückenlehne auf die Sitzfläche vorgeklappt ist; eine Memory-Einrichtung, mittels der das Sitzgestell bei einer Bewegung in Schienenlängsrichtung automatisch in einer vorgebbaren, als Memory-Position definierten Sitzlängsposition angehalten werden kann; Einstellmittel der Memory-Einrichtung (z. B. in Form eines Gleiters), mit denen die Memory-Position in Schienenlängsrichtung einstellbar ist; sowie eine Verriegelungsvorrichtung der Memory-Einrichtung zum Verriegeln einer eingestellten Memory-Position.

Derartige Sitze werden als Vordersitze in Kraftfahrzeugen, insbesondere in zweitürigen Kraftfahrzeugen, eingesetzt, um durch das Vorklappen der Rückenlehne das Einsteigen eines Passagiers oder das Einschieben eines Gegenstandes in den Fond des Kraftfahrzeugs zu erleichtern. Eine zusätzliche Erleichterung beim Einsteigen wird dabei dadurch erreicht, dass der Sitz nach dem Vorklappen der Rückenlehne aufgrund der Entriegelung der Feststellvorrichtung nach vorne verschoben werden kann.

Zum Verschieben des Sitzgestells dient die Schienenlängsführung, die eine fahrzeugfest anzuordnende Führungsschiene sowie eine das Sitzgestell tragende sitzseitige Führungsschiene umfasst. Die beiden Führungsschienen greifen derart ineinander, dass die sitzseitige Führungsschiene entlang der Erstreckungsrichtung der Schienenlängsführung (Schienenlängsrichtung) auf der karosseriefest anzuordnenden Führungsschiene verschoben werden kann, um das Sitzgestell in Schienenlängsrichtung zu verlagern, also die Sitzlängsposition neu einzustellen.

Unter dem Sitzgestell werden dabei vorliegend jeweils sämtliche in Schienenlängsrichtung bewegbare Bestandteile der tragenden Sitzkonstruktion verstanden, also insbesondere auch diejenigen Bestandteile der Schienenlängsführung, wie z. B. die sitzseitige Führungsschiene (Oberschiene), die bei einer Einstellung der Sitzlängsposition in Schienenlängsrichtung bewegt werden.

Die eine Mehrzahl in Schienenlängsrichtung hintereinander angeordneter Verriegelungsstellen aufweisende Verriegelungsschiene der Schienenlängsführung, in die mindestens ein Sperrelement zur Verriegelung der Schienenlängsführung in einer bestimmten Sitzlängsposition eingreifen kann, ist in der Regel mit der karosseriefest anzuordnenden Führungsschiene der Schienenlängsführung zu einer Baueinheit zusammengefasst. Insbesondere kann die Verriegelungsschiene einstückig in die karosseriefest anzuordnende Führungsschiene integriert sein, indem deren Verriegelungsstellen unmittelbar in der karosseriefest anzuordnenden Führungsschiene selbst gebildet sind.

Ein Kraftfahrzeugsitz der eingangs genannten Art ist aus der WO 00/55002 A1 bekannt und bietet zum einen die Möglichkeit, nach dem Vorklappen der Rückenlehne in Richtung auf die Sitzfläche das Sitzgestell, und somit den gesamten Fahrzeugsitz, nach vorne zu verschieben, um das Einsteigen eines Passagiers in den Fond eines Kraftfahrzeugs zu erleichtern (Easy-Entry-Funktion). Zum Anderen kann der Sitz anschließend sehr einfach wieder in seine ursprüngliche Sitzlängsposition verschoben werden, wenn diese Sitzlängsposition mittels der hierfür vorgesehenen Memory-Einrichtung als Memory-Position gespeichert worden ist. In diesem Fall wird das Sitzgestell beim zurückschieben automatisch in der Memory-Position angehalten, wobei ein der Memory-Einrichtung zugeordneter Anschlag mit einem dem Sitzgestell zugeordneten Gegenanschlag zusammenwirkt.

Auch aus der US-A-5 855 349 ist ein Kraftfahrzeugsitz der eingangs genannten Art bekannt. Die dort beschriebene Verriegelungseinrichtung der Memory-Einrichtung weist ein , einen Eingriffsbereich aufweisendes Verriegelungselement auf, das zum Verriegeln der Memory-Einrichtung mit einer in einer Verriegelungsschiene enthaltenen Verriegelungsstelle in Eingriff gebracht wird.

Der Erfindung liegt das Problem zugrunde, einen Kraftfahrzeugsitz der eingangs genannten Art weiter zu verbessern.

Dieses Problem wird erfindungsgemäß durch die Schaffung eines Kraftfahrzeugsitzes mit den Merkmalen des Patentanspruchs 1 gelöst.

Die Verriegelungsvorrichtung zum Verriegeln der Memory-Einrichtung in einer bestimmten Sitzlängsposition weist ein Verriegelungselement auf, das zum Verriegeln der Memory-Einrichtung mit den Verriegelungsstellen der der Feststellvorrichtung zugeordneten Verriegelungsschiene in Eingriff zu bringen ist. Der Eingriffsbereich des Verriegelungselementes der Memory-Einrichtung, über den das Verriegelungselement mit der Verriegelungsschiene in Eingriff gebracht werden kann, ist erfindungsgemäß derart ausgebildet, dass der Eingriffsbereich wahlweise in eine Verriegelungsstelle oder zwei voneinander beabstandete (benachbarte) Verriegelungsstellen der Verriegelungsschiene formschlüssig eingreifen kann. Hierzu weist der Eingriffsbereich des Verriegelungselementes erfindungsgemäß zwei entlang der Erstreckungsrichtung der Führungsschienen (Schienenlängsrichtung) voneinander beabstandete Rastzähne auf, die an die Geometrie und räumliche Anordnung der Verriegelungsstellen der Verriegelungsschiene derart angepasst sind, dass sie mit ihrer äußeren Kontur beide in eine Verriegelungsstelle oder jeder in jeweils eine Verriegelungsstelle eingreifen, wobei im letztgenannten Fall von dem Eingriffsbereich ein zwischen zwei Verriegelungsstellen der Verriegelungsschiene befindlicher Steg übergriffen wird. Hierdurch wird die Anzahl möglicher Verriegelungspositionen des Verriegelungselementes entlang der Verriegelungsschiene maximiert und somit eine besonders feinstufige Einstellung der Memory-Position ermöglicht.

Die erfindungsgemäße Lösung führt zu einer erheblichen Vereinfachung des Aufbaus eines Kraftfahrzeugsitzes mit Easy-Entry-Funktion, da zur Verriegelung der Feststellvorrichtung der Schienenlängsführung einerseits und der Memory-Einrichtung andererseits nur eine einzelne Verriegelungsschiene verwendet wird, in die sowohl die Sperrelemente der Feststellvorrichtung als auch das Verriegelungselement der Memory-Einrichtung eingreifen können.

Die Erfindung beruht auf der Erkenntnis, dass die Feststellvorrichtung der Schienenlängsführung einerseits und die Verriegelungsvorrichtung der Memory-Einrichtung andererseits ein und dieselben Verriegelungsstellen einer Verriegelungsschiene zur Arretierung bzw. Verriegelung nutzen können, ohne die Funktion der Feststellvorrichtung oder der Verriegelungsvorrichtung einzuschränken. Denn gemäß ihrer Aufgabe, den Kraftfahrzeugsitz beim Zurückschieben aus einer vorverlagerten Position, die nach dem Vorklappen der Rückenlehne zur Ausübung der Easy-Entry-Funktion angefahren wurde, wieder in seiner vorherigen Position (Memory-Position) anzuhalten, muss die Verriegelungsvorrichtung der Memory-Einrichtung immer nur dann verriegelt sein, wenn der Kraftfahrzeugsitz mit vorgeklappter Rückenlehne nach vorne verlagert bzw. aus der vorverlagerten Position wieder zurückgeschoben wird. Solange aber die Easy-Entry-Funktion ausgeübt wird, besteht kein Bedarf nach einer Verriegelung der Schienenlängsführung mittels der hierfür vorgesehenen Feststellvorrichtung. Denn die Easy-Entry-Funktion ist ja gerade durch die freie Verschieblichkeit der beiden Führungsschienen zueinander nach einem Vorklappen der Rückenlehne charakterisiert. Somit müssen die Verriegelungsstellen der Verriegelungsschiene erst nach Ausübung der Easy-Entry-Funktion wieder für eine Arretierung der Schienenlängsführung mittels der Feststellvorrichtung nutzbar sein; dann aber wiederum besteht keine Notwendigkeit mehr für eine andauernde Verriegelung der Memory-Einrichtung.

Die erfindungsgemäße Lösung führt zu einer Verringerung der Anzahl notwendiger Komponenten für die Bereitstellung sowohl einer Feststellvorrichtung zum Arretieren der Schienenlängsführung als auch einer verriegelbaren Memory-Einrichtung.

Da die Verriegelungsschiene, die zur Arretierung der Schienenlängsführung und damit des Sitzgestells insgesamt in einer bestimmten Sitzlängsposition vorgesehen ist, sehr stabil ausgestaltet ist, so dass sie beispielsweise in einem Crash-Fall entsprechend hohe Kräfte aufnehmen kann, ist es vorteilhaft, die beim Anfahren der Memory-Position an der Memory-Einrichtung auftretenden Kräfte über das Verriegelungselement der Memory-Einrichtung unmittelbar in jene Verriegelungsschiene einzuleiten. Hierdurch werden die weiteren Komponenten der Memory-Einrichtung entlastet, so dass beispielsweise ein als Einstellmittel der Memory-Einrichtung dienender verschiebbarer Gleiter sowie eine zugehörige Gleitschiene, auf der der Gleiter längsverschieblich gelagert ist, kostengünstig und mit geringem Gewicht aus Kunststoff hergestellt sein können.

Die Verriegelungsschiene kann dabei in einfacher Weise in die karroseriefest anzuordnende Führungsschiene der Schienenlängsführung integriert sein, indem die Verriegelungsstellen in bzw. an jener Führungsschiene vorgesehen sind.

Gemäß einer bevorzugten Weiterbildung der Erfindung weist der Eingriffsbereich des Verriegelungselementes mindestens eine Schrägfläche auf, mittels der der Eingriffsbereich spielfrei an dem Rand einer zugeordneten Verriegelungsstelle in Form einer Verriegelungsöffnung anliegen kann. Unter einer Schrägfläche wird dabei eine Fläche des Eingriffsbereiches verstanden, die sich in einem Winkel von weniger als 90° geneigt (also nicht senkrecht) zu der mit den Verriegelungsöffnungen versehenen Verriegelungsschiene erstreckt. Konkret können die Rastzähne des Eingriffsbereiches konisch ausgebildet sein, also schräg verlaufende Rastflanken aufweisen, die mit dem Rand einer jeweiligen Verriegelungsöffnung zur Anlage bringbar sind.

Das Verriegelungselement ist bevorzugt schwenkbar an den Einstellmitteln der Memory-Einrichtung (in Form eines Gleiters) gelagert, so dass es zum in Eingriff bringen mit der Verriegelungsschiene und zum Ausheben aus den Verriegelungsöffnungen der Verriegelungsschiene jeweils verschwenkt werden muss. In diesem Fall weist das Verriegelungselement im verriegelten Zustand eine unterschiedliche Winkellage in Abhängigkeit davon auf, ob dessen Eingriffsbereich in ein oder zwei Verriegelungsstellen der Verriegelungsschiene eingreift.

Damit ein derartiges Verriegelungselement die zusätzliche Funktion übernehmen kann, das Sitzgestell beim Anfahren der Memory-Position anzuhalten, indem ein Anschlag des Verriegelungselementes mit einem Gegenanschlag einer zusammen mit dem Sitzgestell verschiebbaren Baugruppe in Anlage gerät, weist das Verriegelungselement zwei räumlich voneinander beabstandete Anschlagflächen auf. Die eine Anschlagfläche dient dabei immer dann als Anschlag, wenn das Verriegelungselement über seinen Eingriffsbereich in genau eine Verriegelungsstelle eingreift, während die andere Anschlagfläche dann als Anschlag dient, wenn das Verriegelungselement über den Eingriffsbereich mit zwei Verriegelungsstellen in Eingriff steht. Hierzu sind die beiden Anschlagflächen quer zur Erstreckungsrichtung der Schienenlängsführung (also quer zur Schienenlängsrichtung) übereinander angeordnet und zudem in Schienenlängsrichtung hintereinander angeordnet, wobei die quer zur Schienenlängsrichtung obere Anschlagfläche in Schienenlängsrichtung vor der unteren Anschlagfläche liegt.

Die beiden Anschlagflächen selbst sind bevorzugt derart schräg ausgebildet, dass sie einem Ausheben des Verriegelungselementes aus der Verriegelungsschiene entgegen wirken, wenn der sitzgestellseitige Gegenanschlag an einer jeweiligen Anschlagfläche anliegt.

Der sitzgestellseitige Gegenanschlag kann dabei insbesondere an der Feststellvorrichtung, vorzugsweise einem Träger, Führungskörper oder Gehäuse der Feststellvorrichtung, ausgebildet sein.

Zur Steuerung des in und außer Eingriff Bringens des Verriegelungselementes mit der Verriegelungsschiene ist ein Steuerelement vorgesehen. Dieses wirkt mit dem Verriegelungselement zusammen, um sicherzustellen, dass das Verriegelungselement in die Verriegelungsschiene eingreift und die Memory-Einrichtung verriegelt, wenn die Rückenlehne zur Ausübung der Memory-Funktion vorgeklappt wird. Hierzu kann beispielsweise vorgesehen sein, dass das Verriegelungselement elastisch in Richtung auf den Zustand vorgespannt ist, in dem es sich in Eingriff mit der Verriegelungsschiene befindet. Befindet sich der Sitz mit in Gebrauchsposition angeordneter, also im Wesentlichen aufrechter Rückenlehne in der Memory-Position, so wirkt das Steuerelement derart auf das Verriegelungselement ein, dass es aus der Verriegelungsschiene ausgehoben ist, wobei das Steuerelement bevorzugt in Richtung auf eine Stellung vorgespannt (vorbelastet) ist, in der es in der beschriebenen Weise auf das Verriegelungselement einwirkt. Bei einer Neueinstellung der Sitzlängsposition des Kraftfahrzeugsitzes mit in Gebrauchsposition befindlicher Rückenlehne (als Ausübung einer Komfortfunktion) wird dann gleichzeitig eine neue Memory-Position, entsprechend der neu eingestellten Sitzlängsposition des Kraftfahrzeugsitzes, eingestellt.

Beim Vorklappen der Rückenlehne zur Ausübung der Easy-Entry-Funktion gibt das Steuerelement demgegenüber das Verriegelungselement frei, so dass dieses nun unter der Wirkung der elastischen Vorspannung mit der Verriegelungsschiene in Eingriff tritt und die aktuelle Sitzlängsposition des Kraftfahrzeugsitzes als Memory-Position speichert.

Hierzu kann das Steuerelement beispielsweise über einen Bowdenzug mit der Rückenlehne gekoppelt sein.

Das Steuerelement ist vorzugsweise als ein Steuerhebel ausgebildet, der elastisch in Richtung auf eine Lage vorgespannt ist, in der er so auf das Verriegelungselement einwirkt, dass dieses aus der Verriegelungsschiene ausgehoben ist und der beim Vorklappen der Rückenlehne entgegen jener Vorspannung in eine Lage überführt wird, in der er das Verriegelungselement frei gibt.

Weiterhin kann der Rückenlehne ein Verriegelungsmechanismus beigeordnet sein, mit dem die Rückenlehne in ihrer auf die Sitzfläche vorgeklappten Lage verriegelbar ist, so dass sie während der Ausübung der Memory-Funktion dauerhaft in vorgeklappter Lage verbleibt. Diesem Verriegelungsmechanismus ist ein gemeinsam mit dem Sitzgestell bewegbares, z. B. an der sitzseitigen Schiene gelagertes Auslöseelement zugeordnet, das beim Anfahren der Memory-Position betätigt wird und derart mit dem Entriegelungsmechanismus der Rückenlehne (beispielsweise über einen Bowdenzug) gekoppelt ist, dass es den Verriegelungsmechanismus beim Anfahren der Memory-Position entriegelt. Hierzu kann an der Memory-Einrichtung eine Schaltfläche, z. B. in Form einer Rampe, vorgesehen sein, mit der das vorzugsweise als schwenkbar gelagerter Auslösehebel ausgebildete Auslöseelement beim Erreichen der Memory-Position zusammenwirkt, wobei das Auslöseelement derart betätigt wird, dass es die vorgeklappte Rückenlehne entriegelt. Durch Verwendung einer Rampe (z.B. einer schiefen Ebene) als Schaltfläche wird dabei ein hartes Anfahren eines Anschlages vermieden.

Das Steuerelement, das beim Vorklappen der Rückenlehne die Verriegelung der Memory-Einrichtung bewirkt, sowie das Auslöseelement, das beim Anfahren der Memory-Position nach Ausübung der Easy-Entry-Funktion die Entriegelung der vorgeklappten Rückenlehne bewirkt, sind bevorzugt auf der selben Achse schwenkbar gelagert. Diese Achse ist gemeinsam mit dem Sitzgestell in Schienenlängsrichtung verschiebbar, also insbesondere an der sitzseitigen Führungsschiene der Schienenlängsführung angeordnet.

Da die beim Auftreffen des sitzgestellseitigen Gegenanschlages auf den am Verriegelungselement der Memory-Einrichtung vorgesehenen Anschlag ausgeübten Kräfte über das Verriegelungselement direkt in die sehr stabile Verriegelungsschiene eingeleitet werden können, können der Gleiter, an dem das Verriegelungselement schwenkbar gelagert ist, sowie die zur Führung des Gleiters vorgesehene Gleitschiene kostengünstig aus Kunststoff hergestellt werden.

Das Steuerelement, mit dem das in und außer Eingriff Bringen des Verriegelungselementes der Memory-Einrichtung mit der Verriegelungsschiene steuerbar ist, kann darüber hinaus dazu dienen, bei in Gebrauchsposition befindlicher Rückenlehne und dementsprechend nicht verriegelter Memory-Einrichtung, derart als Mitnehmer auf die Einstellmittel (einen Gleiters) der Memory-Einrichtung einzuwirken, dass bei einer Verstellung des Sitzes mit in Gebrauchsposition befindlicher Rückenlehne die Memory-Position über die Einstellmittel automatisch entsprechend der Verschiebung des Kraftfahrzeugsitzes neu eingestellt wird. Hierzu steht das Steuerelement bei hochgeklappter Rückenlehne mit dem Verriegelungselement der Memory-Einrichtung und/oder dem als Einstellmittel der Memory-Einrichtung dienenden Gleiter formschlüssig in Eingriff.

Wird die Memory-Position nach Ausüben der Easy-Entry-Funktion einmal mit aufrechter Rückenlehne angefahren, etwa im Fall eines Fahrzeugsitzes, der nicht in seiner vorgeklappten Lage verriegelbar ist, so gleitet das Steuerelement über eine Steuerfläche des Verriegelungselementes der Memory-Einrichtung, wobei dieses aus der Verriegelungsschiene ausgehoben wird, und gerät außerdem formschlüssig mit dem Verriegelungselement oder dem zugehörigen Gleiter der Memory-Einrichtung in Eingriff, so dass bei einer Weiterbewegung des Kraftfahrzeugsitzes mit in Gebrauchsposition befindlicher Rückenlehne die Memory-Position neu eingestellt werden kann. Die Memory-Position repräsentiert somit immer die zuletzt mit in Gebrauchsposition befindlicher Rückenlehne angefahrene Sitzlängsposition.

Zur Einwirkung auf die Einstellmittel der Memory-Einrichtung, also insbesondere auf einen Gleiter der Memory-Einrichtung, kann ferner ein separater, von dem Steuerhebel unabhängiger Mitnehmer vorgesehen sein, mit dem das am Gleiter gelagerte Verriegelungselement der Memory-Einrichtung formschlüssig in Eingriff tritt, wenn dieser aus der Verriegelungsschiene ausgehoben ist.

Der Steuerhebel einerseits sowie der separate Mitnehmer andererseits können einander bei der Mitnahme der Einstellmittel der Memory-Einrichtung ergänzen, etwa in dem eines der beiden Bauelemente für eine Mitnahme entlang einer ersten Richtung parallel zur Schienenlängsrichtung und das andere Bauelement für eine Mitnahme in entgegengesetzter Richtung vorgesehen ist. Ferner kann entlang wenigstens einer der beiden möglichen Mitnahmerichtungen auch Redundanz vorgesehen sein, indem sowohl der Steuerhebel als auch der separate Mitnehmer bei der Mitnahme wirksam sein können.

Sofern sich das Verriegelungselement bei einem Vorklappen der Rückenlehne aus ihrer Gebrauchsposition in Richtung auf die Sitzfläche zur Ausübung der Easy-Entry-Funktion nicht sofort mit einer Verriegelungsstelle der Verriegelungsschiene in Eingriff bringen lässt, sondern hierfür noch eine geringfügige Verschiebung in Schienenlängsrichtung erforderlich sein sollte, bis sich das Verriegelungselement mit seinem Eingriffsbereich auf der Höhe einer Verriegelungsstelle befindet, so kann der Mitnehmer auch die Funktion des Weitertransportes der Einstellmittel einschließlich des hieran gelagerten Verriegelungselementes bis zur nächsten Rastposition übernehmen. Dies kann dadurch erfolgen, dass bei nicht vollständig in eine Verriegelungsstelle eingerastetem Verriegelungselement ein hierfür vorgesehener Anschlag des Verriegelungselementes mit dem Mitnehmer zusammenwirkt und erst dann außer Kontakt mit dem Mitnehmer gerät, wenn das Verriegelungselement vollständig in mindestens eine Verriegelungsstelle der Verriegelungsschiene eingerastet ist.

Weitere Merkmale und Vorteile der Erfindung werden bei der nachfolgenden Beschreibung eines Ausführungsbeispieles anhand der Figuren deutlich werden.

Es zeigen:
- Fig. 1: eine perspektivische Darstellung einer Memory-Einrichtung für einen Kraftfahrzeugsitz, der sich mit vorgeklappter Rückenlehne zur Einstiegserleichterung vorverlagern lässt;
- Fig. 2: eine perspektivische Darstellung eines Verriegelungselementes der Memory-Einrichtung aus Figur 1;
- Fig. 3a: eine schematisch geschnittene Seitenansicht der Memory-Einrichtung aus Figur 1 bei in Gebrauchsposition befindlicher, aufrechter Rückenlehne;
- Fig. 3b: eine schematisch geschnittene Seitenansicht der Memory-Einrichtung aus Figur 1 bei vorgeklappter Rückenlehne, wobei das Verriegelungselement der Memory-Einrichtung noch nicht in eine zugeordnete Verriegelungsschiene eingerastet ist;
- Fig. 4a: eine schematisch geschnittene Seitenansicht der Memory-Einrichtung aus Figur 1 bei vorgeklappter Rückenlehne, wobei das Verriegelungselement der Memory-Einrichtung in eine einzelne Verriegelungsöffnung einer zugeordneten Verriegelungsschiene eingerastet ist;
- Fig. 4b: eine schematisch geschnittene Seitenansicht der Memory-Einrichtung aus Figur 1 bei vorgeklappter Rückenlehne, wobei das Verriegelungselement der Memory-Einrichtung in zwei Verriegelungsöffnungen einer zugeordneten Verriegelungsschiene eingerastet ist;
- Fig. 5a - 5d: eine schematische Darstellung der Einwirkung eines Steuerhebels der Memory-Einrichtung auf das Verriegelungselement der Memory-Einrichtung, wenn die Memory-Position bei in Gebrauchsposition befindlicher, aufrechter Rückenlehne des Fahrzeugsitzes angefahren wird;
- Fig. 6a: eine Seitenansicht der Memory-Einrichtung aus Figur 1 bei vorgeklappter und in der vorgeklappten Lage verriegelter Rückenlehne;
- Fig. 6b: die Seitenansicht gemäß Figur 6a während der Entriegelung der vorgeklappten Rückenlehne;
- Fig. 6c: die Seitenansicht aus Figur 6a nach dem Hochklappen der entriegelten Rückenlehne in eine aufrechte Gebrauchsposition;
- Fig. 7: eine schematische Darstellung eines Sitzgestells eines Kraftfahrzeugsitzes.

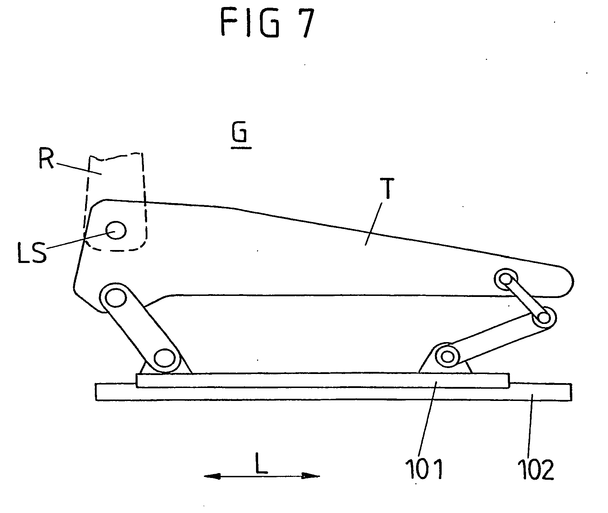

Ein in Figur 7 in einer Seitenansicht schematisch dargestelltes Sitzgestell G (Sitzuntergestell) umfasst eine sitzseitige Führungsschiene 102 (Sitzschiene), die in Schienenlängsrichtung L beweglich auf einer an der Fahrzeugkarosserie zu befestigenden Führungsschiene 101 (Unterschiene) lagert, sowie ein Sitzseitenteil T, das über vordere und hintere Gelenkhebel höhenverstellbar an der Sitzschiene 102 angelenkt ist. Auf der anderen, in Figur 7 nicht erkennbaren Längsseite weist das Sitzgestell G eine entsprechende Anordnung auf. Zwischen den beiden Sitzseitenteilen des Sitzgestells G erstreckt sich ein Sitzträger zur Aufnahme eines Sitzpolsters, auf dessen Sitzfläche ein Fahrzeuginsasse Platz nehmen kann.

Ferner weisen die Seitenteile T des Sitzgestelles G jeweils eine Lagerstelle LS zur schwenkbaren Lagerung einer in Figur 7 gestrichelt angedeuteten Rückenlehne R auf.

Vorliegend werden als Teile des Sitzgestells jeweils alle diejenigen Gestell-Bauteile verstanden, die auf der karosseriefesten Unterschiene 101 in Schienenlängsrichtung L bewegbar sind, also insbesondere die Sitzschiene 102, das Sitzseitenteil T sowie die hiermit verbundenen weiteren Bauteile des Sitzes, wie z. B. die der Höhenverstellung dienenden Gelenkhebel sowie die Rückenlehne R.

Wird ein derartiger in Längsrichtung L verstellbarer Fahrzeugsitz für ein zweitüriges Fahrzeug verwendet, so ist es bekannt, zur Erleichterung des Einstiegs in den Fond des Fahrzeugs die Lehne derart an die Sitzlängsverstellung zu koppeln, dass bei einem Vorklappen der Rückenlehne R in Richtung auf die sich zwischen den Sitzseitenteilen T erstreckende Sitzfläche eine der Schienenlängsführung 101, 102 zugeordnete Feststellvorrichtung entriegelt wird und der Sitz mit vorgeklappter Rückenlehne vorverlagert werden kann. Diese Einstiegserleichterung wird regelmäßig als Easy-Entry-Funktion bezeichnet.

Soll der Fahrzeugsitz nach dem Vorklappen der Rückenlehne auf die Sitzfläche und dem anschließenden Verschieben in eine den Einstieg erleichternde, vorverlagerte Position wieder in seine Ausgangsposition (vor Ausübung der Easy-Entry-Funktion) zurückgeschoben werden, so erleichtert eine sogenannte Memory-Einrichtung das Wiederauffinden der ursprünglichen Sitzposition. Mittels einer Memory-Einrichtung kann beim Vorklappen der Rückenlehne R auf die Sitzfläche eines Fahrzeugsitzes die aktuelle Sitzlängsposition des Sitzgestells G gespeichert und der Sitz beim Zurückschieben aus der vorverlagerten Position automatisch in der als Memory-Position gespeicherten Sitzlängsposition wieder angehalten werden, wobei ein Gegenanschlag einer gemeinsam mit dem Sitzgestell G verschiebbaren Baugruppe auf einen Anschlag der Memory-Einrichtung trifft.

Derartige Kraftfahrzeugsitze mit Easy-Entry-Funktion und Memory-Funktion sind bekannt. Für weitere Einzelheiten wird diesbezüglich beispielhaft auf die WO 00/55 002 A1 verwiesen.

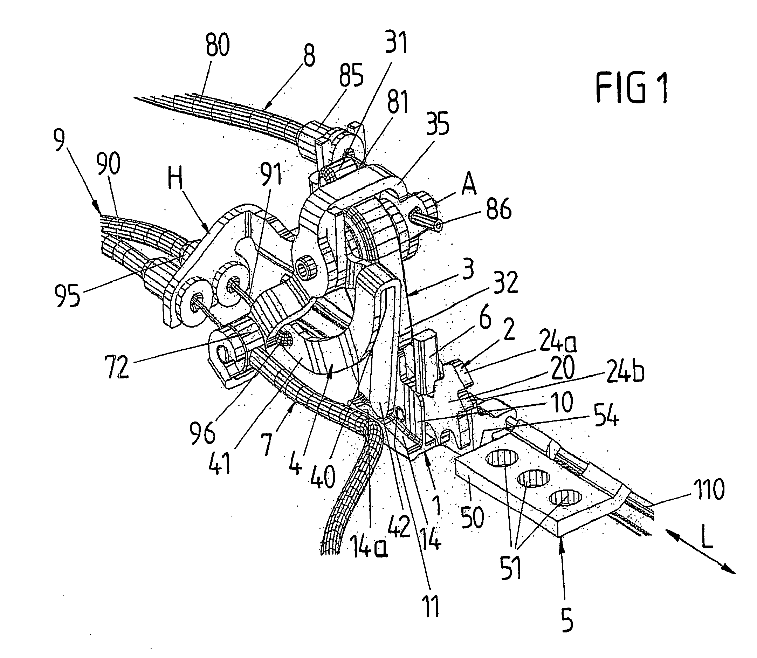

Nachfolgend wird anhand der Figuren 1 bis 6c eine spezielle Ausgestaltung einer Memory-Einrichtung für einen Kraftfahrzeugsitz mit Einstiegserleichterung (Easy-Entry-Funktion) näher erläutert werden.

Figur 1 zeigt die wesentlichen Komponenten einer Memory-Einrichtung für einen Kraftfahrzeugsitz mit Einstiegserleichterung der in Figur 7 dargestellten Art.

Die Memory-Einrichtung umfasst als Einstellmittel einen Gleiter 1, der auf einer in Schienenlängsrichtung 110 erstreckten Gleitschiene längsverschieblich gelagert ist und dessen Grundkörper 10 eine Achse 11 zur schwenkbaren Lagerung eines Verriegelungselementes 2 der Memory-Einrichtung aufweist. Der Gleiter 1 kann auf der Gleitschiene 110, die bevorzugt mit der karosseriefest anzuordnenden Unterschiene 101 der in Figur 7 dargestellten Schienenlängsführung zu einer Baugruppe zusammengefasst ist, in Schienenlängsrichtung L in unterschiedliche Längspositionen verschoben werden, in denen er dann durch Verschwenken des schwenkbar am Grundkörper 10 des Gleiters 1 gelagerten Verriegelungselementes 2 verriegelbar ist. Sowohl der Gleiter 1 als auch die zugeordnete Gleiterführung 110 bestehen dabei bevorzugt aus Kunststoff.

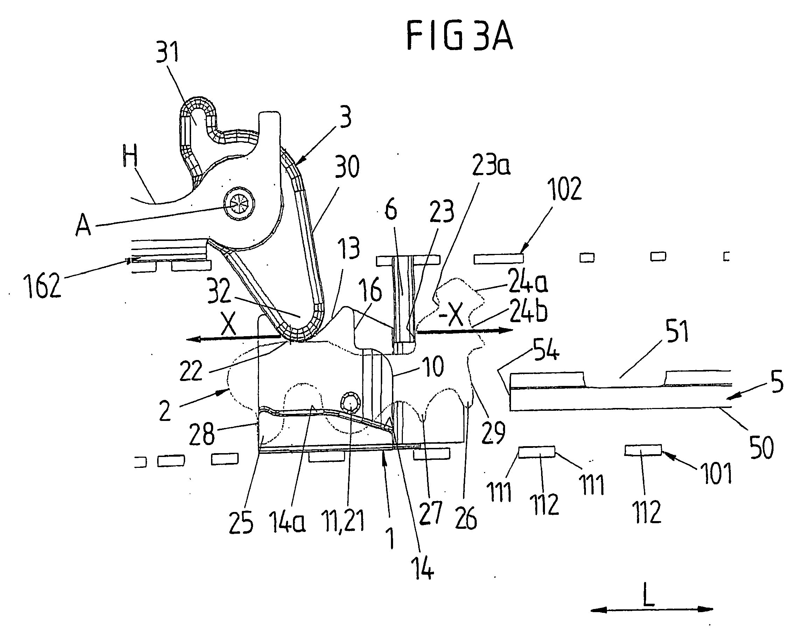

Eine aktuelle Längsposition des Gleiters 1, in der die Memory-Einrichtung mittels des Verriegelungselementes 2 verriegelt ist, entspricht jeweils einer Memory-Position, in der das Sitzgestell G des in Figur 7 dargestellten Fahrzeugsitzes beim Zurückschieben aus einer zur Einstiegserleichterung vorverlagerten Position automatisch angehalten werden kann. Dies wird nachfolgend anhand der Figuren 3a bis 6c näher beschrieben werden.

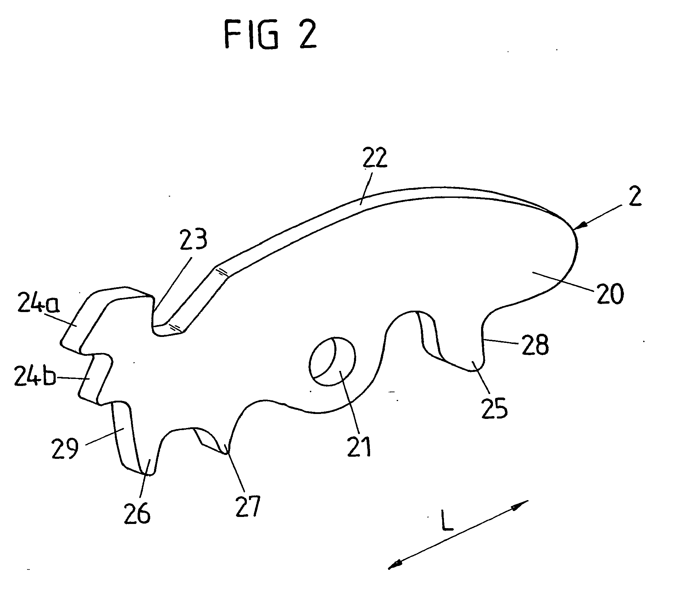

Das zusätzlich in Figur 2 separat dargestellte und vorteilhaft als kostengünstiges Stanzteil ausbildbare Verriegelungselement 2 umfasst einen Grundkörper 20 mit einer Lagerstelle 21 zur schwenkbaren Lagerung des Verriegelungselementes 2 auf der hierfür vorgesehenen Lagerachse 11 am Grundkörper 10 des Gleiters 1. An der Oberseite des Verriegelungselementes 2 erstreckt sich eine Steuerfläche 22, über die das Verriegelungselement 2 mit einem in Figur 1 dargestellten Steuerelement 3 in Form eines Steuerhebels zusammenwirken kann, um den Zustand des Verriegelungselementes zu steuern. Dabei wird unterschieden zwischen einem Zustand, in dem das Verriegelungselement mit seinem durch zwei Rastzähne 26, 27 gebildeten Eingriffsbereich in mindestens eine Verriegelungsöffnung einer Verriegelungsschiene eingreift, so dass die Memory-Einrichtung in einer bestimmten Sitzlängsposition verriegelt ist, und einem Zustand, in dem der durch die beiden in Schienenlängsrichtung L voneinander beabstandeten Sperrzähne gebildete Eingriffsbereich aus der zugeordneten Verriegelungsschiene ausgehoben ist, so dass sich die aus dem Gleiter 1 und dem Verriegelungselement 2 bestehende Memory-Baugruppe 1, 2 zur Neueinstellung der Memory-Position in Schienenlängsrichtung L verschieben lässt.

Ferner weist das Verriegelungselement 2 einen Lagerzapfen 25 für ein elastisches Element, insbesondere in Form einer Schraubenfeder, das sich am Gleiter 1 abstützen kann und mit dem das Verriegelungselement in Richtung auf den verriegelten Zustand vorgespannt sein kann, so dass der Steuerhebel 3 insbesondere zum Ausheben des Eingriffsbereiches 26, 27 des Verriegelungselementes 2 aus der zugeordneten Verriegelungsschiene entgegen der Wirkung jenes elastischen Elementes dient.

Um die Memory-Baugruppe 1, 2 in Schienenlängsrichtung L verschieben zu können, wenn das Verriegelungselement 2 aus der zugeordneten Verriegelungsschiene ausgehoben ist, weist das Verriegelungselement 2 an seiner Oberseite einen durch einen Anschlag gebildeten Mitnahmebereich 23 auf, in den ein mit dem Sitzgestell G, insbesondere dessen Sitzschiene 102 (vergleiche Figur 7) verbundener Mitnehmer 6 eingreifen kann, um die Memory-Baugruppe 1, 2 für eine Neueinstellung der Memory-Position mitzunehmen.

An einer Stirnseite des Verriegelungselementes 2 sind ferner Anschlagflächen 24a, 24b vorgesehen, die im verriegelten Zustand des Verriegelungselementes mit einem sitzgestellseitigen bzw. sitzschienenseitigen Gegenanschlag zusammenwirken können, um das Sitzgestell in der aktuellen Memory-Position anzuhalten.

Zwei weitere, an entgegengesetzten Stirnseiten des Verriegelungselementes 2 vorgesehene Flächen 28, 29 dienen als Anschläge, wenn das Sitzgestell G (vergleiche Figur 7) in seine hinterste Position verfahren wird. Die eine Fläche 28 gerät dann in Kontakt mit einem an der fahrzeugfesten Unterschiene 1 vorgesehenen Endanschlag und die andere Fläche 29 gerät in Kontakt mit einem an dem Führungskörper 50 ausgebildeten Gegenanschlag.

Der Steuerhebel 3 ist an einem Hebelende 31 schwenkbar auf einer Achse A gelagert, die an einem sitzschienenfesten Haltewinkel H ausgebildet ist und weist an seinem anderen Ende 32 eine Steuerkontur (Steuerfläche) auf, über die er mit dem Verriegelungselement 2 zusammenwirken kann. Der Steuerhebel 3 ist an einem Ende 31 mit der durch ein in einer Bowdenhülle 80 (mit Bowdenabstützung 85) geführtes Zugmittel 81 gebildeten Seele eines Bowdenzugs 8 wirkverbunden. Hierzu liegt das eine Ende 31 des angefederten Steuerhebels 3 an einer Wippe 35 an, in die das Zugmittel 81 mit einem Ende 86 formschlüssig eingehängt ist. Über diesen Bowdenzug 8 ist der Steuerhebel 3 mit der Rückenlehne R (vergleiche Figur 7) des Sitzgestells G gekoppelt, so dass er beim Vorklappen der Rückenlehne R auf die Sitzfläche des Sitzgestells G verschwenkbar ist.

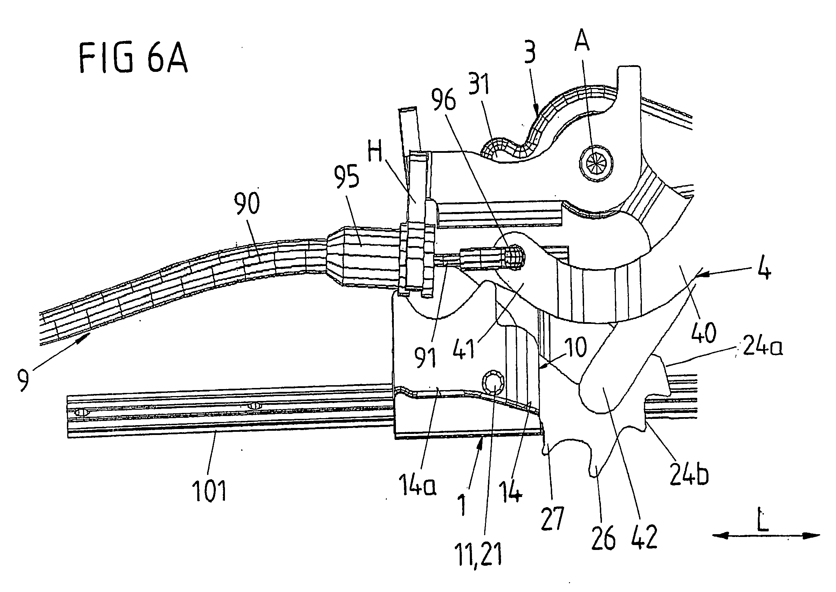

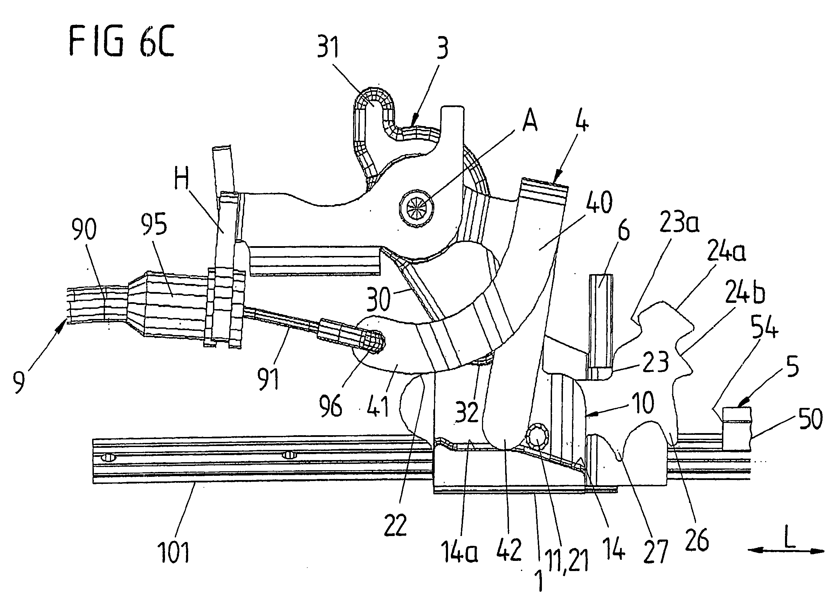

Auf der gleichen Achse A wie der Steuerhebel 3 ist ferner ein Auslösehebel 4 mit einer in seinem Grundkörper 40 vorgesehenen Lagerstelle schwenkbar gelagert. Der Auslösehebel 4 ist, ebenso wie der Steuerhebel 3, an einem Ende 41 mit der durch ein in einer Bowdenhülle 90 (mit Bowdenabstützung 95) geführtes Zugmittel 91 gebildeten Seele eines Bowdenzugs 9 verbunden, indem ein Ende 96 des Zugmittels 91 formschlüssig in einer Öffnung am besagten Ende 41 des Auslösehebels 4 eingehängt ist. Das andere Ende 42 des Auslösehebels 4 kann mit einer Rampe 14 einer Betätigungsfläche 14, 14a des Gleiters 1 der Memory-Baugruppe 1, 2 zusammenwirken, wenn das Sitzgestell die aktuell eingestellte Memory-Position anfährt. Der Auslösehebel 4 dient zur Entriegelung eines Verriegelungsmechanismus, mit dem die Rückenlehne R (vergleiche Figur 7) in ihrem auf die Sitzfläche vorgeklappten Zustand verriegelbar ist, durch Einwirkung auf den Verriegelungsmechanismus über den zugeordneten Bowdenzug 9, wie weiter unten anhand der Figuren 6a bis 6c noch beschrieben werden wird.

Der Haltewinkel H bildet somit zusammen mit den daran befestigten Komponenten, insbesondere dem Steuerhebel 3 und dem Auslösehebel 4 ein vormontierbares Modul, das komplett vormontiert an der Sitzschiene 102 (vergleiche Figur 7) eines Sitzgestells befestigt werden kann. Dabei kann der Auslösehebel 4 optional nur für den Fall vorgesehen sein, dass das Sitzgestell mit einem Verriegelungsmechanismus zur Verriegelung der Rückenlehne im vorgeklappten Zustand ausgerüstet ist.

Ein weiterer mit der Rückenlehne R in Wirkverbindung stehender Bowdenzug 7 dient zur Kopplung der Rückenlehne R an die Feststellvorrichtung 5 der Schienenlängsführung 101, 102 (vergleiche Figur 7), um diese beim Vorklappen der Rückenlehne R auf die Sitzfläche des Sitzgestells G in bekannter Weise lösen zu können, so dass sich die beiden Führungsschienen 102, 101 zur Vorverlagerung des Sitzgestells G zueinander verschieben lassen. Dieser weitere Bowdenzug 7 ist über die oben beschriebene Wippe 35 mit der Rückenlehne gekoppelt, wobei der Bowdenzug 7 über ein Distanzstück 72 vergleichsweise große Winkelbewegungen der Wippe 35 (bis zu 60°) aufnehmen kann.

Bei einem Verschwenken der Wippe 35 wird eine Bewegung der Hülle des Bowdenzugs 7 entlang der Bowdenzugachse bewirkt, welche für die Entriegelung der Feststellvorrichtung 5 genutzt wird.

Von dieser Feststellvorrichtung 5 ist in Figur 1 lediglich ein an der Sitzschiene 102 angeordneter Führungskörper 50 erkennbar, der drei Führungsöffnungen 51 zur längsverschieblichen Führung von Sperrelementen aufweist, die zur Arretierung der beiden Führungsschienen 101, 102 dienen. Der Führungskörper 50 bildet ferner den Gegenanschlag 54, der mit einer der Anschlagflächen 24a, 24b des Verriegelungselementes 3 in Eingriff treten kann, um das Sitzgestell in einer als Memory-Position gespeicherten Sitzlängsposition anzuhalten.

Figur 3a zeigt eine schematische seitliche Schnittansicht der Memory-Baugruppe aus Figur 1 ohne den Auslösehebel 4, dafür aber zusammen mit der fahrzeugfest anzuordnenden Unterschiene 101 und der hierauf verschieblich gelagerten Sitzschiene 102.

In die Unterschiene 101 ist eine Verriegelungsschiene integriert, die durch eine Mehrzahl in Schienenlängsrichtung L hintereinander angeordneter und durch Stege 112 voneinander getrennter Verriegelungsöffnungen 111 gebildet wird, in welche die in den Führungsöffnungen 51 des Führungskörpers 5 zu führenden Sperrzähne eingreifen können, um die Schienenlängsführung 101, 102 in einer zuvor eingestellten Längsposition zu arretieren.

Dabei ist der durch die beiden in Schienenlängsrichtung L voneinander beabstandeten Rastzähne 26, 27 gebildete Eingriffsbereich des Verriegelungselementes 2 so ausgebildet, dass auch dieser Eingriffsbereich 26, 27 in die Verriegelungsöffnungen 111 der an der Unterschiene 101 ausgebildeten Verriegelungsschiene eingreifen kann, um die Memory-Baugruppe 1, 2 in einer definierten Längsposition zu verriegeln. Es werden also ein und dieselben Verriegelungsöffnungen 111 sowohl zur Arretierung der Schienenlängsführung 101, 102 mittels am Führungskörper 50 geführter Sperrelemente als auch zur Verriegelung der Memory-Baugruppe 1, 2 mittels am Verriegelungselement vorgesehener Rastzähne 26, 27 genutzt.

In dem in Figur 3a gezeigten Zustand, der einer aufrechten, in Gebrauchsposition befindlichen Rückenlehne R (vergleiche Figur 7) entspricht, befinden sich die Rastzähne 26, 27 des Verriegelungselementes 2 jedoch nicht in Eingriff mit den Verriegelungsöffnungen 111 sondern sind vielmehr aus der Verriegelungsschiene 111, 112 ausgehoben. Dies ist darauf zurückzuführen, dass der Steuerhebel 3 mit der an einem Ende 32 seines Grundkörpers 30 ausgebildeten Steuerfläche derart auf eine zugeordnete Steuerfläche 22 des Verriegelungselementes 2 einwirkt, dass dieses in einer Schwenklage gehalten wird, in der die Rastzähne 26, 27 außer Eingriff mit der Verriegelungsschiene 111, 112 stehen.

Die Position des Steuerhebels 3, in der dieser mit der an einem Endabschnitt 32 ausgebildeten Steuerfläche auf die zugeordnete Steuerfläche 22 des Verriegelungselementes 2 einwirkt, entspricht der Normalposition bzw. normalen Schwenklage des Steuerhebels 3, in Richtung auf welche er mittels einer Feder (insbesondere Drehfeder) elastisch vorgespannt ist. In diesem Zustand greift der Steuerhebel 3 mit seinem mit der Steuerfläche versehenen Endabschnitt 32 an einem (durch eine Vertiefung des Grundkörpers 10 gebildeten) Mitnahmebereich 13 des Grundkörpers 10 des Gleiters 1 an, so dass bei einer Verschiebung des Sitzgestells mit in Gebrauchsposition befindlicher Rückenlehne entlang zumindest einer Raumrichtung x parallel zur Schienenlängsrichtung L der Gleiter 1 und damit die Memory-Baugruppe 1, 2 insgesamt durch den Steuerhebel 3 mitgenommen werden. Bei einer Verschiebung des Sitzgestells in entgegengesetzter Richtung -x parallel zur Schienenlängsrichtung L erfolgt die Mitnahme über einen separaten, sitzschienenfesten Mitnehmer 6, der hierbei auf einen entsprechenden Mitnahmeanschlag 23 des Verriegelungselementes 2 einwirkt.

Darüber hinaus dient der Mitnehmer 6 als redundantes Element bei der Mitnahme der Memory-Baugruppe 1, 2 entlang der Richtung x, die an sich mittels des Steuerhebels 3 erfolgen soll. Hierzu kann der Mitnehmer 6 mit einem entsprechenden Anschlag 16 des Gleiters 1 zusammenwirken.

Im Ergebnis wird bei in aufrechter Gebrauchsposition befindlicher Rückenlehne R (vergleiche Figur 7) die Memory-Baugruppe 1, 2 bei jeder Neueinstellung der Sitzlängsposition des Sitzgestells G über den Steuerhebel 3 und/oder den Mitnehmer 6 mitgenommen, so dass die durch die Lage der Memory-Baugruppe 1, 2 definierte Memory-Position jeweils an die aktuelle Komfortposition des Sitzgestells G in Schienenlängsrichtung L angepasst wird. Dies ist möglich, da das Verriegelungselement 2 bei in aufrechter Gebrauchsposition befindlicher Rückenlehne mittels des Steuerhebels 3 aus der zugeordneten Verriegelungsschiene 111, 112 ausgehoben ist.

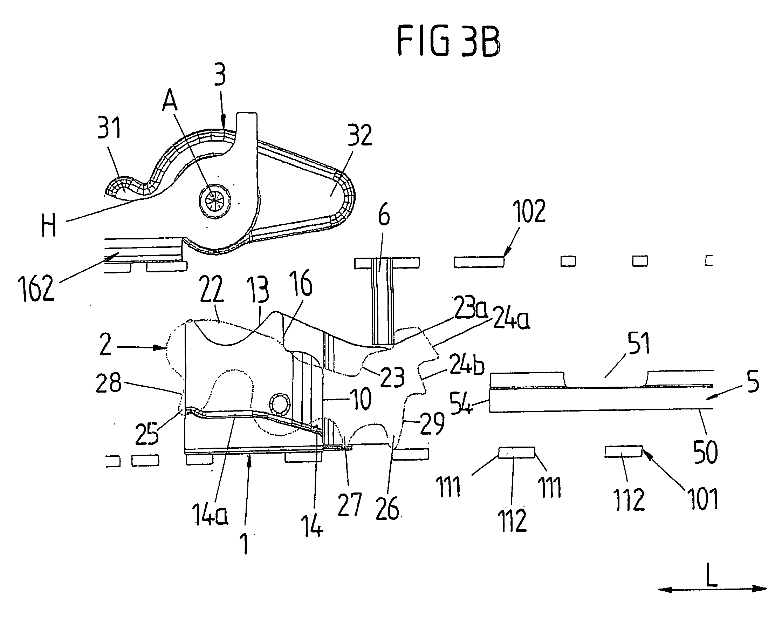

Figur 3b zeigt die Anordnung gemäß Figur 3a nach dem Vorklappen der Rückenlehne R in Richtung auf die Sitzfläche des Sitzgestells G. Hierbei wirkt der in Figur 1 dargestellte Bowdenzug 8 mit seinem Zugmittel 81 derart auf das zugeordnete Ende 31 des Steuerhebels 3 ein, dass dieser durch Verschwenken um seine Achse A (entgegen dem Uhrzeigersinn) außer Eingriff mit der Steuerfläche 22 des Verriegelungselementes 2 gebracht wird und nicht mehr auf dieses einwirkt. Hierdurch wird das Verriegelungselement unter der Wirkung der Vorspannung eines hierfür vorgesehenen (in den Figuren nicht dargestellten) elastischen Elementes derart (im Uhrzeigersinn) verschwenkt, dass der Eingriffsbereich 26, 27 des Verriegelungselementes 2 die Tendenz hat, in mindestens eine der Verriegelungsöffnungen 111 der Verriegelungsschiene 111, 112 einzugreifen. Dies ist jedoch in dem in Figur 3b gezeigten Zustand deshalb nicht möglich, weil sich die Memory-Baugruppe 1, 2 in einer Längsposition befindet, in der der eine Rastzahn 26 des Eingriffsbereiches 26, 27 am Rand einer der Öffnungen 111 aufschlägt.

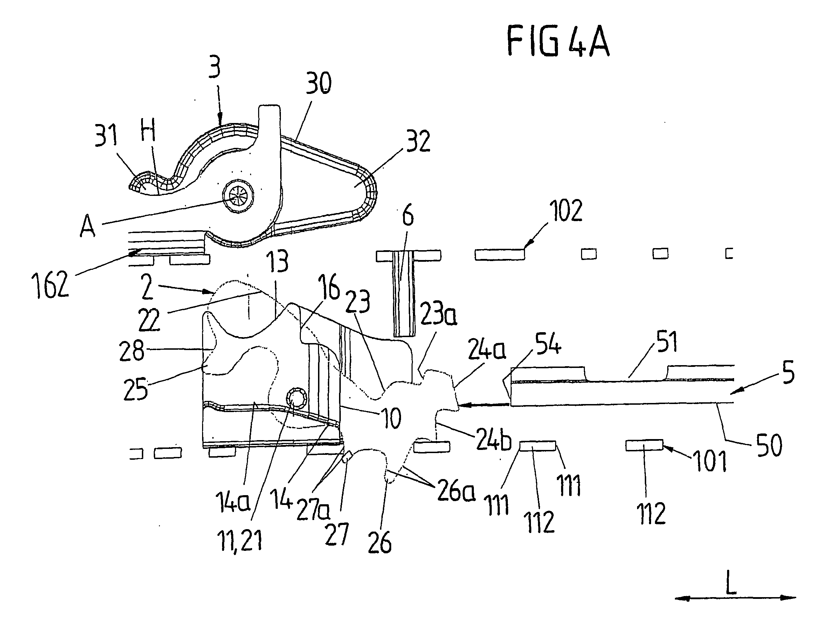

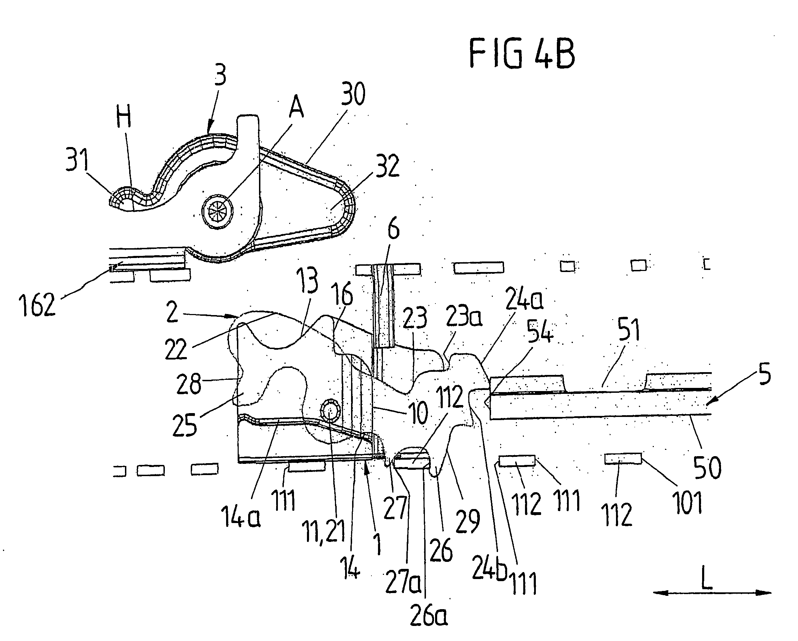

D. h., nach dem Vorklappen der Rückenlehne auf die Sitzfläche ist in diesem Fall die Memory-Baugruppe 1, 2 nicht sofort in Ihrer aktuellen Position verriegelt, da der Eingriffsbereich 26, 27 des Verriegelungselementes 2 noch auf einem Steg 112 der Verriegelungsschiene 111, 112 aufliegt. Allerdings befindet sich in diesem nicht vollständig eingerasteten Zustand des Verriegelungselementes 2 der Mitnehmer 6 noch in Anlage mit einem oberen Fortsatz 23a des zugeordneten Mitnahmeanschlages 23 des Verriegelungselementes 2. Hierdurch wird die Memory-Baugruppe 1, 2 bei der anschließenden Vorverlagerung des Sitzgestells G mit vorgeklappter Rückenlehne R über den sitzschienenfesten Mitnehmer 6 noch ein kleines Stück mitgenommen, bis der Eingriffsbereich 26, 27 vollständig in die nächstfolgende Verriegelungsöffnung 111 bzw. die nächstfolgenden Verriegelungsöffnungen 111 einrasten kann, wie anhand der Figuren 4a und 4b dargestellt. Die tatsächlich gespeicherte Memory-Position weicht dann nur geringfügig von der ursprünglichen Sitzlängsposition des Sitzgestells G ab.

Figur 4a zeigt eine Anordnung gemäß den Figuren 3a und 3b, wobei nun das Verriegelungselement 2 nach dem Vorklappen der Rückenlehne und dem Verschwenken des Steuerhebels 3 mit beiden Rastzähnen 26, 27 seines Eingriffsbereichs in eine einzelne Verriegelungsöffnung 111 der Verriegelungsschiene 111, 112 eingreift. Dabei liegen die konisch ausgebildeten Rastzähne 26, 27 mit jeweils einer ihrer schräg verlaufenden Rastflanken 26a, 27a am Rand der entsprechenden Verriegelungsöffnung 111 an, so dass eine spielfreie Verriegelung der Memory-Einrichtung sichergestellt ist.

In diesem Zustand dient die obere Anschlagfläche 24a des Verriegelungselementes 2 als Anschlag, mit dem der am schienenfesten Führungskörper 50 ausgebildete Gegenanschlag 54 beim Anfahren der Memory-Position (nach Ausüben der Easy-Entry-Funktion) in Eingriff treten kann, um das Sitzgestell erneut in seine ursprünglichen, als Memory-Position gespeicherten Sitzlängsposition anzuhalten. Die beim Anfahren der Memory-Position durch den Gegenanschlag 54 auf die zugeordnete Anschlagfläche 24a des Verriegelungselementes 2 ausgeübten Kräfte werden über den Grundkörper 20 des Verriegelungselementes 2 und dessen Eingriffsbereich 26, 27 unmittelbar in die Verriegelungsschiene 111, 112 abgeleitet, so dass der zur Lagerung des Verriegelungselementes 2 dienende Gleiter 1 sowie die zugeordnete Gleitführung 110 (vergleiche Figur 1) kostengünstig und gewichtsparend aus Kunststoff hergestellt werden können. Insbesondere wird nämlich durch die unmittelbare Einleitung der am Verriegelungselement 2 wirkenden Kräfte in die Verriegelungsschiene 111, 112 die am Grundkörper 10 des Gleiters 1 ausgebildete Lagerachse 11 für das Verriegelungselement 2 entlastet. Die verbleibenden Restkräfte, die dennoch am Gleiter 1 wirken, drücken diesen gegen die Verriegelungsschiene 111, 112, so dass auch diese Kräfte in die Verriegelungsschiene 111, 112 abgeleitet werden.

Aufgrund des geneigten Verlaufs der Anschlagfläche 24a bezüglich der Schienenlängsrichtung L (schräg in einem Winkel von weniger als 90°) wirkt der am Führungskörper 50 ausgebildete Gegenanschlag 54 zusätzlich einem Ausheben des Eingriffsbereiches 26, 27 des Verriegelungselementes 2 aus der zugeordneten Verriegelungsöffnung 111 entgegen.

Figur 4b zeigt in Abwandlung von Figur 4a eine Situation, in der das Verriegelungselement 2 mit seinem Eingriffsbereich 26, 27 in zwei Verriegelungsöffnungen 111 eingreift, nämlich mit jedem Rastzahn 26 und 27 in eine Verriegelungsöffnung, wobei der dazwischen liegende Steg 112 der Verriegelungsschiene 111, 112 überbrückt wird. Auch hier erfolgt die Verriegelung wiederum spielfrei durch die Anlage schräg verlaufender Rastflanken 26a, 27a der Rastzähne 26, 27 am Rand der jeweiligen Öffnung 111.

In diesem Zustand ist der Eingriffsbereich 26, 27 des Verriegelungselementes 2 weniger tief in die zugeordneten Rastöffnungen 111 eingetaucht als in dem in Figur 4a dargestellten Zustand, in dem der Eingriffsbereich 26, 27 in eine einzelne Verriegelungsöffnung 111 eingetaucht ist. Daher dient hier die zweite, untere Anschlagfläche 24b der beiden übereinander angeordneten Anschlagflächen 24a, 24b des Verriegelungselementes 2 zum Anhalten des Sitzgestells beim Erreichen der Memory-Position, indem der am Führungskörper 50 ausgebildete Gegenanschlag 54 mit jener unteren Anschlagfläche 24b in Eingriff tritt.

Wie anhand Figur 4b erkennbar, sind die beiden Anschlagflächen 24a, 24b nicht nur senkrecht zur Schienenlängsführung L vertikal übereinander angeordnet, sondern auch in Schienenlängsrichtung L versetzt zueinander. Die räumliche Anordnung der beiden Anschlagflächen 24a, 24b ist so gewählt, dass sich der Führungskörper 50 beim Auftreffen seines Gegenanschlages 54 auf die jeweils aktive Anschlagfläche 24a oder 24b des Sperrelementes 2 jeweils in einer Position befindet, in der mindestens eines der in den Führungsöffnungen 51 des Führungskörpers 50 geführten Sperrelemente in eine zugeordnete Verriegelungsöffnung 111 der Verriegelungsschiene 111, 112 eingreifen kann. Im Ergebnis kann das Sitzgestell nach dem Anfahren der Memory-Position durch Hochklappen der Rückenlehne sofort in der erreichten Sitzlängsposition (Memory-Position) arretiert werden.

Im Übrigen weist auch die zweite, untere Anschlagfläche 24b des Sperrelementes 2 einen geneigten Verlauf bezüglich der Schienenlängsrichtung L auf, so dass der Gegenanschlag 54 die Tendenz hat, das Verriegelungselement 2 im eingerasteten Zustand zu halten, wenn es an jener Anschlagfläche 24b anliegt.

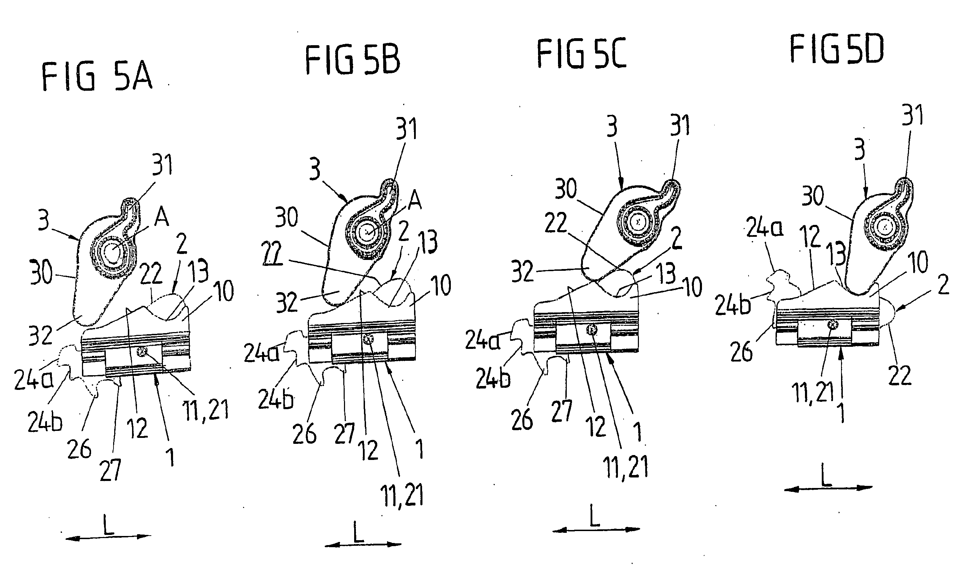

Die Figuren 5a bis 5d zeigen schematisch die Memory-Baugruppe 1, 2 sowie den Steuerhebel 3 beim Anfahren der Memory-Position mit in Gebrauchsposition befindlicher, aufrechter Rückenlehne. Eine solche Situation kann beispielsweise dann auftreten, wenn der Rückenlehne des Kraftfahrzeugsitzes kein Verriegelungsmechanismus zugeordnet ist, durch den die Rückenlehne während der Ausübung der Easy-Entry-Funktion in vorgeklappter Lage verriegelt werden kann.

Figur 5a zeigt die Annäherung des Steuerhebels 3, der wegen der in Gebrauchsposition befindlichen Rückenlehne im Wesentlichen senkrecht orientiert ist, an die Memory-Baugruppe 1, 2 beim Zurückschieben des Fahrzeugsitzes mit aufrechter, in Gebrauchsposition befindlicher Rückenlehne nach dem Ausüben der Easy-Entry-Funktion. Der Steuerhebel 3 wird dabei durch ein elastisches Element in der in Figur 5a dargestellten Normalposition gehalten, da bei nicht vorgeklappter Rückenlehne der mit der Rückenlehne gekoppelte Bowdenzug 8 (vergleiche Figur 1) keine Kraft über die Wippe 35 (als vermittelndes Element) auf den Steuerhebel 3 ausübt.

Bei weiterer Annäherung an die Memory-Position gleitet der Steuerhebel 3 gemäß Figur 5b mit seiner am unteren Ende 32 vorgesehenen Steuerfläche über eine zugeordnete Steuerfläche 12 des Gleiters 1, wobei er gemäß Figur 5c auf die Steuerfläche 22 des Verriegelungselementes 2 geführt wird und dieses derart verschwenkt, dass es aus der zugeordneten Verriegelungsschiene ausgehoben wird. Dabei gerät der Steuerhebel 3 gemäß Figur 5d mit seinem unteren Ende 32 in den Mitnahmebereich 13 des Gleiters 1, so dass dieser bei einer weiteren Verschiebung des Sitzes mit aufrechter Rückenlehne zusammen mit der gesamten Memory-Baugruppe 1, 2 mitgenommen werden kann. Wichtig ist hierbei, dass gemäß den Figuren 5c und 5d zunächst das Ausheben des Verriegelungselementes 2 aus der zugeordneten Verriegelungsschiene und erst dabei oder danach der vollständige Eingriff des Steuerhebels 3 in den Mitnahmebereich 13 des Gleiters 1 erfolgt.

Das Ausheben des Verriegelungselementes 2 durch den Steuerhebel 3 wird dadurch unterstützt, dass der Steuerhebel 3 beim Überfahren der im verriegelten Zustand des Sperrelementes 2 unterschienenfesten, schräg verlaufenden Steuerfläche 12 des Gleiters 1 entgegen der Vorspannung des dem Steuerhebel 3 zugeordneten elastischen Elementes, z. B. in Form einer Schenkelfeder, ausgelenkt wird, wobei das besagte elastische Element weiter gespannt wird. Nach Überschreiten des höchsten Punktes der schräg bzw. rampenartig verlaufenden Steuer- und Führungsfläche 12 des Gleiters 1 unterstützt die zusätzlich aufgebaute Spannung des elastischen Elementes das Einschwenken des Steuerhebels 3 in den Mitnahmebereich 13 des Gleiters 1, wobei das Verriegelungselement 2 verschwenkt und aus der zugeordneten Verriegelungsschiene ausgehoben wird.

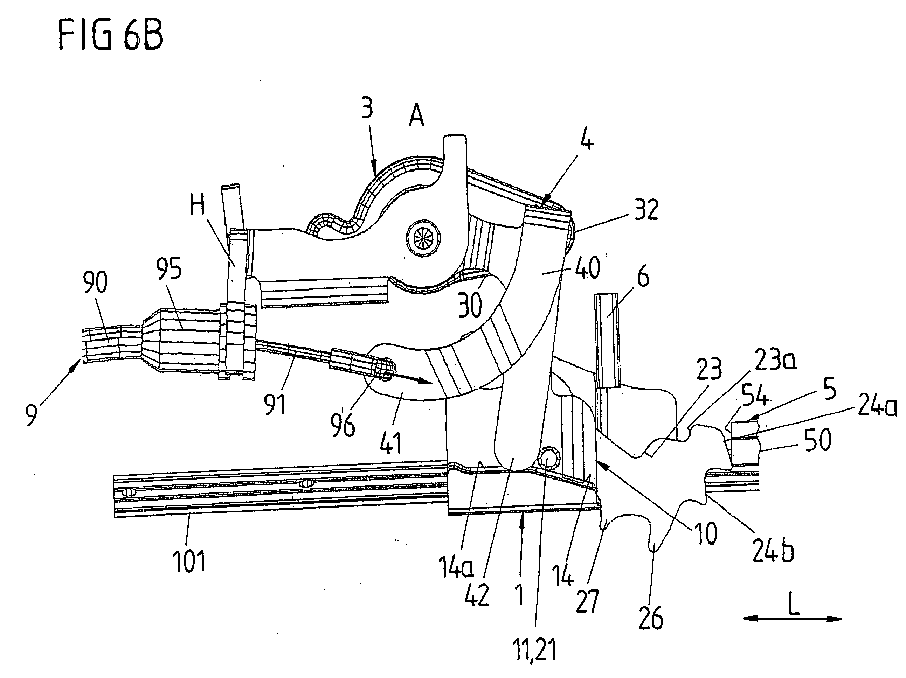

Figur 6a zeigt eine weitere, geschnittene Seitenansicht der Memory-Einrichtung aus Figur 1, nun aber zusammen mit dem Auslösehebel 4 für den Verriegelungsmechanismus der vorgeklappten Rückenlehne. Dabei ist in Figur 6a ein Zustand dargestellt, in dem die Memory-Baugruppe 1, 2 in einer zuvor eingestellten Sitzlängsposition als Memory-Position verriegelt ist und das Sitzgestell mit vorgeklappter Rückenlehne nach Ausübung der Easy-Entry-Funktion nach hinten zurückgeschoben wird, wobei sich der an einem sitzgestell- bzw. sitzschienenfesten Halter H schwenkbar angelenkte Auslösehebel 4 der Memory-Baugruppe 1 nähert. Wie eine Zusammenschau mit Figur 6b zeigt, gleitet der Auslösehebel 4 hierbei mit einem Ende 42 über eine am Gleiter vorgesehene Rampe 14 auf eine an die Rampe 14 anschließende, im Wesentlichen horizontale Sützfläche 14a, wobei der Auslösehebel 4 derart (entgegen dem Uhrzeigersinn) um seine Achse A verschwenkt wird, dass er eine Zugkraft auf die Seele 91 des zugeordneten Bowdenzugs 9 ausübt. Gleichzeitig gelangt der Gegenanschlag 54 des Führungskörpers 50 in Anschlag mit einer zugeordneten Anschlagfläche 24a des noch im verriegelten Zustand befindlichen Verriegelungselementes 2, so dass das Sitzgestell angehalten wird, nachdem der Auslösehebel 4 beim Überfahren der Rampe 14 verschwenkt worden ist und die an die Rampe 14 anschließende (horizontale) Stützfläche 14a erreicht hat.

Durch die Schwenkbewegung des Auslösehebels 4 wird auf das als Seele des zugeordneten Bowdenzugs 9 dienende, am ersten Ende 41 des Auslösehebels 4 eingehängte Zugmittel 91 eine Zugkraft ausgeübt, die zu einer Entriegelung des Verriegelungsmechanismus der vorgeklappten Rückenlehne führt. Hierzu ist der Bowdenzug 9 in geeigneter Weise mit jenem Verriegelungsmechanismus gekoppelt.

Somit kann die Rückenlehne nun zurück in ihre aufrechte Gebrauchsposition geklappt werden, wobei der Steuerhebel 3 unter der Wirkung der zugeordneten Schenkelfeder wieder seine Normalposition einnimmt, da der Bowdenzug, über den der Steuerhebel 3 mit der Rückenlehne gekoppelt ist, nicht mehr entgegen der Wirkung der Schenkelfeder auf den Steuerhebel 3 einwirkt. Hierbei gerät der Steuerhebel 3 mit seinem eine Steuerfläche bildenden Ende 32 in Anschlag mit der zugeordneten Steuerfläche 22 des Sperrelementes 2 und hebt dieses aus der zugeordneten Verriegelungsschiene aus. Die Memory-Einrichtung befindet sich dann wieder in dem anhand Figur 3a erläuterten Zustand, in dem die Memory-Baugruppe 1, 2 bei einer Verschiebung des Sitzgestells mit in Gebrauchsposition befindlicher, aufrechter Rückenlehne zur Neueinstellung der Memory-Position mitgenommen werden kann.

## Patentansprüche

1. Kraftfahrzeugsitz mit
- einem Sitzgestell (G),
- einer Rückenlehne (R), die schwenkbar an dem Sitzgestell (G) gelagert und in Richtung auf eine Sitzfläche des Sitzgestells vorklappbar ist,
- einer Schienenlängsführung (101, 102), mit der das Sitzgestell (G) zur Einstellung der Sitzlängsposition in Schienenlängsrichtung (L) bewegbar ist,
- einer Feststellvorrichtung (5) zum Arretieren der Schienenlängsführung in einer zuvor eingestellten Sitzlängsposition mit mindestens einem beweglich gelagerten Sperrelement, dem eine entlang der Schienenlängsrichtung (L) erstreckte Verriegelungsschiene (111, 112) mit einer Mehrzahl entlang der Schienenlängsrichtung (L) hintereinander angeordneter Verriegelungsstellen (111) zugeordnet ist, mit denen das Sperrelement zur Verriegelung der Schienenlängsführung (101, 102) in Eingriff bringbar ist,
- einem gemeinsam mit dem Sitzgestell (G) in Schienenlängsrichtung (L) bewegbaren Koppelmechanismus (7), der die Feststellvorrichtung (5) entriegelt, wenn die Rückenlehne (R) auf die Sitzfläche vorgeklappt ist,
- einer Memory-Einrichtung, mittels der das Sitzgestell (G) bei einer Bewegung in Schienenlängsrichtung (L) automatisch in einer vorgebbaren, als Memory-Position definierten Sitzlängsposition angehalten werden kann,
- Einstellmitteln (1) der Memory-Einrichtung, mit denen die Memory-Position in Schienenlängsrichtung (L) einstellbar ist und
- einer Verriegelungsvorrichtung der Memory-Einrichtung zum Verriegeln einer eingestellten Memory-Position,
wobei die Verriegelungsvorrichtung zum Verriegeln der Memory-Einrichtung ein Verriegelungselement (2) aufweist, das mit mindestens einer Verriegelungsstelle (111) der der Feststellvorrichtung (5) zugeordneten Verriegelungsschiene (111, 112) in Eingriff bringbar ist, wobei,
**das** Verriegelungselement (2) einen Eingriffsbereich (26, 27) aufweist, über den es mit der Verriegelungsschiene (111, 112) in Eingriff bringbar ist,
**dadurch gekennzeichnet, dass** der Eingriffsbereich (26, 27) zwei Rastzähne (26; 27) aufweist, die zur Verriegelung der Memory-Einrichtung wahlweise beide in eine Verriegelungsselle (111) oder in zwei benachbarte Verriegelungsstellen (111) einführbar sind.

2. Kraftfahrzeugsitz nach Anspruch 1, **dadurch gekennzeichnet, dass** die Verriegelungsstellen (111) durch Verriegelungsöffnungen gebildet werden.

3. Kraftfahrzeugsitz nach Anspruch 1 oder 2, **dadurch gekennzeichnet, dass** der Eingriffsbereich (26, 27) Anlageflächen, insbesondere in Form von Schrägflächen (26a, 27a), aufweist, über die der Eingriffsbereich (26, 27) spielfrei an dem Rand der jeweils zugeordneten Verriegelungsöffnung (111) anliegen kann.

4. Kraftfahrzeugsitz nach Anspruch3, **dadurch gekennzeichnet, dass** die Rastzähne (26; 27) konisch ausgebildet sind, so dass sie mit ihren durch Schrägflächen (26a, 27a) gebildeten Rastflanken spielfrei am Rand der jeweils zugeordneten Verriegelungsöffnung (111) anliegen können.

5. Kraftfahrzeugsitz nach einem der vorhergehenden Ansprüche, **dadurch gekennzeichnet, dass** das Verriegelungselement (2) zum in Eingriff Bringen und außer Eingriff Bringen mit der Verriegelungsschiene (111, 112) verschwenkbar ist.

6. Kraftfahrzeugsitz nach Anspruch 5, **dadurch gekennzeichnet, dass** das Verriegelungselement (2) im verriegelten Zustand eine unterschiedliche Winkellage in Abhängigkeit davon aufweist, ob dessen Eingriffsbereich (26, 27) in eine Verriegelungsstelle (111) oder zwei Verriegelungsstellen (111) der Verriegelungsschiene (111, 112) eingreift.

7. Kraftfahrzeugsitz nach einem der vorhergehenden Ansprüche, **dadurch gekennzeichnet, dass** das Verriegelungselement (2) einen Anschlag (24a, 24b) aufweist, mit dem ein Gegenanschlag (54) einer zusammen mit dem Sitzgestell (G) verschiebbaren Baugruppe (5) in Kontakt bringbar ist, um das Sitzgestell (G) beim Erreichen der Memory-Position anzuhalten.

8. Kraftfahrzeugsitz nach Anspruch 6 und 7, **dadurch gekennzeichnet, dass** das Verriegelungselement (2) zwei räumlich voneinander beabstandete Anschlagflächen (24a, 24b) aufweist, von denen die eine Anschlagfläche (24a) mit dem Gegenanschlag (54) in Kontakt treten kann, wenn der Eingriffsbereich (26, 27) in eine Verriegelungsstelle (111) der Verriegelungsschiene (111, 112) eingerastet ist, und von denen die andere Anschlagfläche (24b) mit dem Gegenanschlag (54) in Kontakt treten kann, wenn der Eingriffsbereich (26, 27) in zwei benachbarte Verriegelungsstellen (111) der Verriegelungsschiene (111, 112) eingerastet ist.

9. Kraftfahrzeugsitz nach Anspruch8, **dadurch gekennzeichnet, dass** die beiden Anschlagflächen (24a, 24b) quer zur Schienenlängsrichtung (L) übereinander angeordnet sind.

10. Kraftfahrzeugsitz nach Anspruch9, **dadurch gekennzeichnet, dass** die beiden Anschlagflächen (24a, 24b) in Schienenlängsrichtung (L) hintereinander angeordnet sind.

11. Kraftfahrzeugsitz nach einem der Ansprüche8 bis 10, **dadurch gekennzeichnet, dass** die Anschlagflächen (24a, 24b) derart ausgebildet sind, dass der Gegenanschlag (54) einem Ausheben des Verriegelungselementes (2) aus der Verriegelungsschiene (111, 112) entgegenwirkt, wenn er an einer der Anschlagflächen (24a, 24b) anliegt.

12. Kraftfahrzeugsitz nach Anspruch 11, **dadurch gekennzeichnet, dass** die jeweils mit dem Gegenanschlag (54) zusammenwirkende Anschlagfläche (24a, 24b) des Verriegelungselementes (2) geneigt zur Schienenlängsrichtung (L) verläuft, wenn das Verriegelungselement (2) in die Verriegelungsschiene (111, 112) eingreift.

13. Kraftfahrzeugsitz nach einem der vorhergehenden Ansprüche, **gekennzeichnet durch** ein Steuerelement (3), mit dem das in Eingriff Bringen und außer Eingriff Bringen des Verriegelungselementes (2) mit der Verriegelungsschiene (111, 112) in Abhängigkeit davon steuerbar ist, ob sich die Rückenlehne (R) in einer im Wesentlichen aufrechten Gebrauchsposition oder in einer auf die Sitzfläche vorgeklappten Position befindet.

14. Kraftfahrzeugsitz nach Anspruch 13, **dadurch gekennzeichnet, dass** das Steuerelement (3) mit der Rückenlehne (R) in Wirkverbindung steht, insbesondere über einen Bowdenzug (8), so dass es beim Vorklappen der Rückenlehne (R) betätigbar ist.

15. Kraftfahrzeugsitz nach Anspruch 13 oder14, **dadurch gekennzeichnet, dass** das Steuerelement (3) durch einen bei Betätigung verschwenkbaren Steuerhebel gebildet wird.

16. Kraftfahrzeugsitz nach einem der vorhergehenden Ansprüche, **dadurch gekennzeichnet, dass** die Rückenlehne (R) in ihrer auf die Sitzfläche vorgeklappten Position mittels eines Verriegelungsmechanismus verriegelbar ist.

17. Kraftfahrzeugsitz nach Anspruch 16, **dadurch gekennzeichnet, dass** der Verriegelungsmechanismus der Rückenlehne mittels eines Auslöseelementes (4) entriegelbar ist, das beim Anfahren der Memory-Position betätigt wird und das mit dem Verriegelungsmechanismus der Rückenlehne gekoppelt ist, so dass der Verriegelungsmechanismus beim Anfahren der Memory-Position entriegelbar ist.

18. Kraftfahrzeugsitz nach Anspruch 17, **dadurch gekennzeichnet, dass** das Auslöseelement (4) mit dem Verriegelungsmechanismus der Rückenlehne (R) über einen Bowdenzug (9) gekoppelt ist.

19. Kraftfahrzeugsitz nach Anspruch 17 oder 18, **dadurch gekennzeichnet, dass** das Auslöseelement (4) durch einen schwenkbar gelagerten Auslösehebel gebildet wird.

20. Kraftfahrzeugsitz nach einem der Ansprüche 13 bis 15 und einem der Ansprüche 17 bis19, **dadurch gekennzeichnet, dass** das Steuerelement (3) und das Auslöseelement (4) auf der selben Achse (A) schwenkbar gelagert sind.

21. Kraftfahrzeugsitz nach Anspruch20, **dadurch gekennzeichnet, dass** die Achse (A) an einer gemeinsam mit dem Sitzgestell (G) in Schienenlängsrichtung (L) verschiebbaren Baugruppe (H) angeordnet ist.

22. Kraftfahrzeugsitz nach einem der Ansprüche 17 bis 21, **gekennzeichnet durch** eine Rampe (14) der Einstellmittel (1), auf die das Auslöseelement (4) beim Anfahren der Memory-Position auffahren kann, wodurch das Auslöselement (4) zu Entriegeln des Verriegelungsmechanismus betätigt wird.

23. Kraftfahrzeugsitz nach einem der vorhergehenden Ansprüche, **dadurch gekennzeichnet, dass** das Verriegelungselement (2) an einem in Schienenlängsrichtung (L) verschiebbaren und als Einstellmittel der Memory-Einrichtung dienenden Gleiter (1) gelagert ist.

24. Kraftfahrzeugsitz nach einem der Ansprüche 13 bis 15 oder einem der Ansprüche 16 bis 23, soweit rückbezogen auf Anspruch 13, **dadurch gekennzeichnet, dass** das Steuerelement (3) mit dem Verriegelungselement (2) und/oder dem Einstellmittel (1) formschlüssig in Eingriff bringbar ist, um bei einer Verschiebung des Sitzgestells (G) in Schienenlängsrichtung (L) das Einstellmittel (1) und das Verriegelungselement (2) für eine Neueinstellung der Memory-Position mitzunehmen, wobei das Steuerelement (3) bevorzugt in Richtung auf den Eingriff vorgespannt ist.

25. Kraftfahrzeugsitz nach Anspruch 24, **dadurch gekennzeichnet, dass** das Steuerelement formschlüssig mit dem Einstellmittel (1) und/oder dem Verriegelungselement (2) in Eingriff gerät, wenn es in eine Lage gebracht wird, in der es auf das Verriegelungselement (2) einwirkt, um dieses aus der Verriegelungsschiene (111, 112) auszuheben.

26. Kraftfahrzeugsitz nach einem der Ansprüche 13 bis 15 und einem der Ansprüche 23 bis 25, **dadurch gekennzeichnet, dass** das Steuerelement (3) beim Anfahren der Memory-Position mit hochgeklappter Rückenlehne (R) zum Ausheben des Verriegelungselementes (2) aus der Verriegelungsschiene (111, 112) über Steuerflächen (12, 22) des Einstellmittels (1) und des Verriegelungselementes (2) gleitet und dabei formschlüssig mit dem Einstellmittel (1) in Eingriff gerät, so dass das Steuerelement (3) bei einer weiteren Verstellung des Sitzgestells (G) mit hochgeklappter Rückenlehne (R) das Einstellmittel (1) entlang wenigstens einer Raumrichtung parallel zur Schienenlängsrichtung (L) mitnehmen kann.

27. Kraftfahrzeugsitz nach einem der Ansprüche 24 bis 26, **dadurch gekennzeichnet, dass** an einer gemeinsam mit dem Sitzgestell (G) in Schienenlängsrichtung (L) verschiebbaren Baugruppe (102) ein zusätzlicher Mitnehmer (6) angeordnet ist, der mit dem Verriegelungselement (2) in Eingriff bringbar ist, wenn in einer Memory-Position des Sitzgestells (G) das Verriegelungselement (2) aus der Verriegelungsschiene (111, 112) ausgehoben wird.

28. Kraftfahrzeugsitz nach Anspruch 27, **dadurch gekennzeichnet, dass** das Verriegelungselement (2) eine Mitnahmefläche (23a) aufweist, über die es mit dem Mitnehmer (6) in Eingriff bringbar ist, wenn es mit seinem Eingriffsbereich (26, 27) auf der Verriegelungsschiene (111, 112) aufliegt, ohne in eine Verriegelungsöffnung (111) eingerastet zu sein, so dass das Verriegelungselement (2) durch den Mitnehmer (6) bei einem Verschieben des Sitzgestells (G) in Schienenlängsrichtung (L) mitnehmbar ist, bis es in mindestens eine Verriegelungsstelle (111) einrastet.

29. Kraftfahrzeugsitz nach einem der vorhergehenden Ansprüche, **dadurch gekennzeichnet, dass** das Einstellmittel (1) aus Kunststoff besteht.

30. Kraftfahrzeugsitz nach einem der vorhergehenden Ansprüche, **dadurch gekennzeichnet, dass** das Einstellmittel (1) auf einer aus Kunststoff bestehenden Gleitschiene (110) längsverschieblich geführt ist.

31. Kraftfahrzeugsitz nach einem der vorhergehenden Ansprüche, **dadurch gekennzeichnet, dass** die Feststellvorrichtung (5) einen Gegenanschlag (54) bildet, der beim Verschieben des Sitzgestells (G) in die Memory-Position mit einem Anschlag (24a, 24b) der Memory-Einrichtung in Eingriff tritt.

32. Kraftfahrzeugsitz nach einem der vorhergehenden Ansprüche, **dadurch gekennzeichnet, dass** die Verriegelungsstellen (111) in oder an einer karosseriefest anzuordnenden Führungsschiene (101) der Schienenlängsführung (101, 102) vorgesehen sind.

## Claims

1. A motor vehicle seat with
- a seat frame (G),
- a backrest (R) which is pivotably mounted on the seat frame (G) and may be folded down in the direction of a seat surface of the seat frame,
- a longitudinal rail guide (101, 102) with which the seat frame (G) may be moved in a longitudinal rail direction (L) for adjusting the longitudinal seating position,
- a fixing device (5) for locking the longitudinal rail guide in a pre-set longitudinal seating position with at least one movably mounted locking element to which a locking rail (111, 112), extending along the longitudinal rail direction (L) with a plurality of locking points (111) which are successively arranged in the longitudinal rail direction (L), is associated, with which locking points (111) the locking element is able to be brought into engagement for locking the longitudinal rail guide (101, 102),
- a coupling mechanism (7) which is able to move together with the seat frame (G) in the longitudinal rail direction (L) and which unlocks the fixing device (5) when the backrest (R) is folded down onto the seat surface,
- a memory unit by means of which the seat frame (G) is able to be automatically stopped in a predeterminable longitudinal seating position, defined as the memory position, when movement occurs in the longitudinal rail direction (L),
- means (1) for adjusting the memory unit with which the memory position may be adjusted in the longitudinal rail direction (L) and
- a locking device for the memory unit for the locking of a set memory position,
wherein the locking device for locking the memory unit comprises a locking element (2) which may be brought into engagement with at least one locking point (111) of the locking rail (111, 112) associated with the fixing device (5), wherein the locking element (2) has an engagement region (26, 27) via which it may be brought into engagement with the locking rail (111, 112)
**characterized in that** the engagement region (26, 27) comprises two latching teeth (26, 27) which may both be selectively introduced into one locking point (111) or into two adjacent locking points (111), for locking the memory unit.

2. The motor vehicle seat as claimed in claim 1, **characterized in that** the locking points (111) are formed by locking apertures.

3. The motor vehicle seat as claimed in claim 1 or 2, **characterized in that** the engagement region (26, 27) comprises stop faces, in particular in the form of oblique faces (26a, 27a), via which the engagement region (26, 27) may bear without clearance against the edge of the respectively associated locking aperture (111).

4. The motor vehicle seat as claimed in claim 3, **characterized in that** the latching teeth (26; 27) are of conical configuration so that they may bear without clearance with their latching edges formed by oblique faces (26a, 27a) against the edge of the respectively associated locking aperture (111).

5. The motor vehicle seat as claimed in one of the preceding claims, **characterized in that** the locking element (2) may be pivoted in order to be brought into and out of engagement with the locking rail (111, 112).

6. The motor vehicle seat as claimed in claim 5, **characterized in that** the locking element (2) in the locked state has a variable angular position depending on whether the engagement region (26, 27) thereof engages in one locking point (111) or two locking points (111) of the locking rail (111, 112).

7. The motor vehicle seat as claimed in one of the preceding claims, **characterized in that** the locking element (2) has a stop (24a, 24b) with which a counter stop (54) of a structural unit (5), which may be displaced together with the seat frame (G), may be brought into contact in order to stop the seat frame (G) when reaching the memory position.

8. The motor vehicle seat as claimed in claims 6 and 7, **characterized in that** the locking element (2) has two stop faces (24a, 24b) spaced apart from one another, of which the one stop face (24a) may come into contact with the counter stop (54) when the engagement region (26, 27) is engaged in a locking point (111) of the locking rail (111, 112), and of which the other stop face (24b) may come into contact with the counter stop (54) when the engagement region (26, 27) is engaged in two adjacent locking points (111) of the locking rail (111, 112).

9. The motor vehicle seat as claimed in claim 8, **characterized in that** the two stop faces (24a, 24b) are arranged above one another transversely to the longitudinal rail direction (L).

10. The motor vehicle seat as claimed in claim 9, **characterized in that** the two stop faces (24a, 24b) are arranged successively in the longitudinal rail direction (L).

11. The motor vehicle seat as claimed in one of claims 8 to 10, **characterized in that** the stop faces (24a, 24b) are configured such that the counter stop (54) acts against the lifting of the locking element (2) out of the locking rail (111, 112) when it bears against one of the stop faces (24a, 24b).

12. The motor vehicle seat as claimed in claim 11, **characterized in that** the stop face (24a, 24b) of the locking element (2) respectively cooperating with the counter stop (54), extends at an angle to the longitudinal rail direction (L), when the locking element (2) engages in the locking rail (111, 112).

13. The motor vehicle seat as claimed in one of the preceding claims, **characterized by** a control element (3) with which the bringing of the locking element (2) into and out of engagement with the locking rail (111, 112) may be controlled, depending on whether the backrest (R) is located in a substantially upright position of use or in a position folded-down onto the seat surface.

14. The motor vehicle seat as claimed in claim 13, **characterized in that** the control element (3) cooperates with the backrest (R), in particular via a Bowden cable (8) so that it may be actuated when folding the backrest (R) down.

15. The motor vehicle seat as claimed in claim 13 or 14, **characterized in that** the control element (3) is formed by a control lever which may be pivoted upon actuation.

16. The motor vehicle seat as claimed in one of the preceding claims, **characterized in that** the backrest (R) may be locked in its position folded-down onto the seat surface by means of a locking mechanism.

17. The motor vehicle seat as claimed in claim 16, **characterized in that** the locking mechanism of the backrest may be unlocked by means of a release element (4) which is actuated when reaching the memory position and which is coupled to the locking mechanism of the backrest so that the locking mechanism may be unlocked when reaching the memory position.

18. The motor vehicle seat as claimed in claim 17, **characterized in that** the release element (4) is coupled to the locking mechanism of the backrest (R) via a Bowden cable (9).

19. The motor vehicle seat as claimed in claim 17 or 18, **characterized in that** the release element (4) is formed by a pivotably mounted release lever.

20. The motor vehicle seat as claimed in one of claims 13 to 15, and one of claims 17 to 19, **characterized in that** the control element (3) and the release element (4) are pivotably mounted on the same axis (A).

21. The motor vehicle seat as claimed in claim 20, **characterized in that** the axis (A) is arranged on a structural unit (H) which may be displaced together with the seat frame (G) in the longitudinal rail direction (L).

22. The motor vehicle seat as claimed in one of claims 17 to 21, **characterized by** a ramp (14) of the means (1) for adjusting onto which the release element (4) may move upward, when reaching the memory position, whereby the release element (4) is actuated to unlock the locking mechanism.

23. The motor vehicle seat as claimed in one of the preceding claims, **characterized in that** the locking element (2) is mounted on a sliding element (1) displaceable in the longitudinal rail direction (L) and serving as a means for adjusting the memory unit.

24. The motor vehicle seat as claimed in one of claims 13 to 15 or one of claims 16 to 23, referring back to claim 13, **characterized in that** the control element (3) may be brought into positive engagement with the locking element (2) and/or the means (1) for adjusting, in order to drive the means (1) for adjusting and the locking element (2) for readjusting the memory position, when the seat frame (G) is displaced in the longitudinal rail direction (L), the control element (3) preferably being pretensioned in the direction of the engagement.

25. The motor vehicle seat as claimed in claim 24, **characterized in that** the control element comes into positive engagement with the means (1) for adjusting and/or the locking element (2) when it is brought into a position in which it acts on the locking element (2) in order to lift said locking element out of the locking rail (111, 112).

26. The motor vehicle seat as claimed in one of claims 13 to 15, and one of claims 23 to 25, **characterized in that,** when reaching the memory position with the backrest (R) folded upward, the control element (3) slides over control surfaces (12, 22) of the means (1) for adjusting and of the locking element (2) for lifting the locking element (2) out of the locking rail (111, 112) and thus comes into positive engagement with the means (1) for adjusting so that, during a further adjustment of the seat frame (G), with the backrest (R) folded upward, the control element (3) may drive the means (1) for adjusting in at least one spatial direction parallel to the longitudinal rail direction (L).

27. The motor vehicle seat as claimed in one of claims 24 to 26, **characterized in that** on a structural unit (102) which is displaceable together with the seat frame (G) in the longitudinal rail direction (L), an additional drive element (6) is arranged which may be brought into engagement with the locking element (2) when the locking element (2) is lifted out of the locking rail (111, 112) in a memory position of the seat frame (G).

28. The motor vehicle seat as claimed in claim 27, **characterized in that** the locking element (2) has a drive surface (23a) via which it may be brought into engagement with the drive element (6) when it bears with its engagement region (26, 27) against the locking rail (111, 112), without being engaged in a locking aperture (111), so that the locking element (2) may be driven by the drive element (6) during a displacement of the seat frame (G) in the longitudinal rail direction (L), until it engages in at least one locking point (111).

29. The motor vehicle seat as claimed in one of the preceding claims, **characterized in that** the means (1) for adjusting consist of plastics.

30. The motor vehicle seat as claimed in one of the preceding claims, **characterized in that** the means (1) for adjusting is longitudinally displaceably guided on a slide rail (110) consisting of plastics.

31. The motor vehicle seat as claimed in one of the preceding claims, **characterized in that** the fixing device (5) forms a counter stop (54) which, during displacement of the seat frame (G) into the memory position, comes into engagement with a stop (24a, 24b) of the memory unit.

32. The motor vehicle seat as claimed in one of the preceding claims, **characterized in that** the locking points (111) are provided in or on a guide rail (101) of the longitudinal rail guide (101, 102) to be arranged fixed to the bodywork.

## Revendications

1. Siège de véhicule automobile comprenant
- un châssis de siège (G),
- un dossier (R), qui est monté pivotant sur le châssis de siège (G) et peut être rabattu en direction d'une surface d'assise du châssis de siège,
- un dispositif de guidage longitudinal sur rail (101, 102) avec lequel le châssis de siège (G) peut être déplacé dans la direction longitudinale du rail (L) pour régler la position longitudinale du siège,
- un dispositif de blocage (5) destiné à bloquer le dispositif de guidage longitudinal sur rail dans une position longitudinale du siège préalablement réglée avec au moins un élément de verrouillage monté mobile, auquel est associé un rail de verrouillage (111, 112) étendu le long de la direction longitudinale du rail (L) comprenant une pluralité de sites de verrouillage (111) disposés les uns derrière les autres le long de la direction longitudinale du rail (L), avec lesquels l'élément de verrouillage destiné à verrouiller le guidage longitudinal sur rail (102, 103) peut être amené en prise,
- un mécanisme de couplage (7) mobile conjointement avec le châssis de siège (G) dans la direction longitudinale du rail (L), lequel mécanisme déverrouille le dispositif de blocage (5) lorsque le dossier (R) est rabattu sur la surface d'assise,
- un dispositif mémoire, au moyen duquel le châssis de siège (G), lors d'un déplacement dans la direction longitudinale du rail (L), peut être arrêté automatiquement dans une position longitudinale de siège pouvant être prédéterminée, définie comme position de mémoire,
- des moyens de réglage (1) du dispositif mémoire, avec lesquels la position de mémoire peut être réglée dans la direction longitudinale du rail (L) et
- un dispositif de verrouillage du dispositif mémoire destiné à verrouiller une position de mémoire réglée,
le dispositif de verrouillage destiné à verrouiller le dispositif mémoire comprenant un élément de verrouillage (2), qui peut être amené en prise avec au moins un site de verrouillage (111) du rail de verrouillage (111, 112) associé au dispositif de blocage (5), l'élément de verrouillage (2) comprenant une zone de mise en prise (26, 27), au-dessus de laquelle il peut se mettre en prise avec le rail de verrouillage (111, 112), **caractérisé en ce que** la zone de mise en prise (26, 27) comprend deux dents d'arrêt (26 ; 27) qui, pour verrouiller le dispositif mémoire, peuvent être introduites toutes les deux au choix dans un site de verrouillage (111) ou dans deux sites de verrouillage (111) voisins.

2. Siège de véhicule automobile selon la revendication 1, **caractérisé en ce que** les sites de verrouillage (111) sont formés par des ouvertures de verrouillage.

3. Siège de véhicule automobile selon la revendication 1 ou 2, **caractérisé en ce que** la zone de mise en prise (26, 27) comprend des surfaces de portée, en particulier sous forme de surfaces inclinées (26a, 27a), au-dessus desquelles la zone de mise en prise (26, 27) peut reposer sans jeu contre le bord de l'ouverture de verrouillage (111) respectivement associée.

4. Siège de véhicule automobile selon la revendication 3, **caractérisé en ce que** les dents d'arrêt (26 ; 27) sont conçues de façon conique, de sorte qu'elles peuvent reposer avec leurs flancs d'arrêt formés par les surfaces inclinées (26a, 27a) sans jeu contre le bord de l'ouverture de verrouillage (111) respectivement associée.

5. Siège de véhicule automobile selon l'une quelconque des revendications précédentes, **caractérisé en ce que** l'élément de verrouillage (2) peut pivoter pour se mettre en prise et sortir de la prise avec le rail de verrouillage (111, 112).

6. Siège de véhicule automobile selon la revendication 5, **caractérisé en ce que** l'élément de verrouillage (2) comprend dans l'état verrouillé une position angulaire différente selon que sa zone de mise en prise (26, 27) se met en prise dans un site de verrouillage (111) ou deux sites de verrouillage (111) du rail de verrouillage (111, 112).

7. Siège de véhicule automobile selon l'une quelconque des revendications précédentes, **caractérisé en ce que** l'élément de verrouillage (2) comprend une butée (24a, 24b) avec laquelle une contre-butée (54) d'un sous-groupe (5) mobile solidaire avec le châssis de siège (G) peut être amenée en contact, afin d'arrêter le châssis de siège (G) lorsqu'il a atteint la position de mémoire.

8. Siège de véhicule automobile selon les revendications 6 et 7, **caractérisé en ce que** l'élément de verrouillage (2) comprend deux surfaces de butée (24a, 24b) distantes l'une de l'autre dans l'espace, parmi lesquelles l'une des surfaces de butée (24a) peut entrer en contact avec la contre-butée (54) lorsque la zone de mise en prise (26, 27) est enclenchée dans un site de verrouillage (111) du rail de verrouillage (111, 112), et parmi lesquelles l'autre surface de butée (24b) peut entrer en contact avec la contre-butée (54) lorsque la zone de mise en prise (26, 27) est enclenchée dans deux sites de verrouillage (111) voisins du rail de verrouillage (111, 112).

9. Siège de véhicule automobile selon la revendication 8, **caractérisé en ce que** les deux surfaces de butée (24a, 24b) sont disposées l'une sur l'autre transversalement à la direction longitudinale du rail (L).

10. Siège de véhicule automobile selon la revendication 9, **caractérisé en ce que** les deux surfaces de butée (24a, 24b) sont disposées l'une derrière l'autre dans la direction longitudinale du rail (L).

11. Siège de véhicule automobile selon l'une quelconque des revendications 8 à 10, **caractérisé en ce que** les surfaces de butée (24a, 24b) sont conçues de telle sorte que la contre-butée (54) s'oppose à une extraction de l'élément de verrouillage (2) depuis le rail de guidage (111, 112) lorsqu'il repose contre une des surfaces de butée (24a, 24b).

12. Siège de véhicule automobile selon la revendication 11, **caractérisé en ce que** la surface de butée (24a, 24b) de l'élément de verrouillage (2) coopérant respectivement avec la contre-butée (54) s'étend de manière inclinée par rapport à la direction longitudinale du rail (L) lorsque l'élément de verrouillage (2) s'engage dans le rail de verrouillage (111, 112).

13. Siège de véhicule automobile selon l'une quelconque des revendications précédentes, **caractérisé par** un élément de commande (3) avec lequel l'amenée en prise et l'amenée hors de prise de l'élément de verrouillage (2) avec le rail de verrouillage (111, 112) peut être commandée selon que le dossier (R) se trouve dans une position d'utilisation sensiblement verticale ou dans une position rabattue sur la surface d'assise.

14. Siège de véhicule automobile selon la revendication 13, **caractérisé en ce que** l'élément de commande (3) est en liaison fonctionnelle avec le dossier (R), en particulier par l'intermédiaire d'un câble Bowden (8), de sorte qu'il peut être actionné lors du rabattement du dossier (R).

15. Siège de véhicule automobile selon la revendication 13 ou 14, **caractérisé en ce que** l'élément de commande (3) est formé par un levier de commande pouvant pivoter lors de l'actionnement.

16. Siège de véhicule automobile selon l'une quelconque des revendications précédentes, **caractérisé en ce que** le dossier (R) peut être verrouillé dans sa position rabattue sur la surface d'assise au moyen d'un mécanisme de verrouillage.

17. Siège de véhicule automobile selon la revendication 16, **caractérisé en ce que** le mécanisme de verrouillage du dossier peut être déverrouillé au moyen d'un élément de déblocage (4), qui est actionné lors de l'activation de la position de mémoire et qui est couplé au mécanisme de verrouillage du dossier, de sorte que le mécanisme de verrouillage peut être déverrouillé lors de l'activation de la position de mémoire.

18. Siège de véhicule automobile selon la revendication 17, **caractérisé en ce que** l'élément de déblocage (4) est couplé au mécanisme de verrouillage du dossier (R) par un câble Bowden (9).

19. Siège de véhicule automobile selon la revendication 17 ou 18, **caractérisé en ce que** l'élément de déblocage (4) est formé par un levier de déblocage monté pivotant.

20. Siège de véhicule automobile selon l'une quelconque des revendications 13 à 15 et l'une des revendications 17 à 19, **caractérisé en ce que** l'élément de commande (3) et l'élément de déblocage (4) sont montés pivotants sur le même axe (A).

21. Siège de véhicule automobile selon la revendication 20, **caractérisé en ce que** l'axe (A) est disposé sur un sous-groupe (H) mobile solidairement avec le châssis de siège (G) dans la direction longitudinale du siège (L).

22. Siège de véhicule automobile selon l'une quelconque des revendications 17 à 21, **caractérisé par** une rampe (14) des moyens de réglage (1), sur laquelle l'élément de déblocage (4) peut avancer lors de l'activation de la position de mémoire, l'élément de déblocage (4) étant actionné pour déverrouiller le mécanisme de verrouillage.

23. Siège de véhicule automobile selon l'une quelconque des revendications précédentes, **caractérisé en ce que** l'élément de verrouillage (2) est monté sur un patin mobile dans la direction longitudinale du rail (L) et servant de moyens de réglage du dispositif mémoire.

24. Siège de véhicule automobile selon l'une quelconque des revendications 13 à 15 ou l'une des revendications 16 à 23, dans la mesure où elle dépend de la revendication 13, **caractérisé en ce que** l'élément de commande (3) peut être amené en prise avec l'élément de verrouillage (2) et/ou les moyens de réglage (1) par coopération de formes, afin, lors d'un déplacement du châssis de siège (G) dans la direction longitudinale du rail (L), d'entraîner les moyens de réglage (1) et l'élément de verrouillage (2) pour un nouveau réglage de la position de mémoire, l'élément de commande (3) étant de préférence précontraint en vue de la mise en prise.

25. Siège de véhicule automobile selon la revendication 24, **caractérisé en ce que** l'élément de commande se retrouve en prise par coopération de formes avec les moyens de réglage (1) et/ou l'élément de verrouillage (2) lorsqu'il est amené dans une position dans laquelle il agit sur l'élément de verrouillage (2) afin d'extraire celui-ci du rail de verrouillage (111, 112).

26. Siège de véhicule automobile selon l'une quelconque des revendications 13 à 15 et l'une des revendications 23 à 25, **caractérisé en ce que** l'élément de commande (3) lors de la mise en marche de la position de mémoire avec le dossier (R) relevé pour extraire l'élément de verrouillage (2) du rail de verrouillage (111, 112) glisse au-dessus des surfaces de commande (12, 22) des moyens de réglage (1) et de l'élément de verrouillage (2) et se retrouve dans ce cas par coopération de formes en prise avec les moyens de réglage (1), de sorte que l'élément de commande (3) lors d'un autre déplacement du châssis de siège (G) avec le dossier (R) relevé peut entraîner les moyens de réglage (1) le long d'au moins une direction dans l'espace parallèlement à la direction longitudinale du rail (L).

27. Siège de véhicule automobile selon l'une quelconque des revendications 24 à 26, **caractérisé en ce qu'**un entraîneur (6) additionnel est disposé sur un sous-groupe (102) mobile solidaire avec le châssis de siège (G) dans la direction longitudinale du rail (L), lequel entraîneur peut être amené en prise avec l'élément de verrouillage (2) lorsque, dans une position de mémoire du châssis de siège (G), l'élément de verrouillage (2) est extrait du rail de verrouillage (111, 112).

28. Siège de véhicule automobile selon la revendication 27, **caractérisé en ce que** l'élément de verrouillage (2) comprend une surface d'entraînement (23a) au-dessus de laquelle il peut être amené en prise avec l'entraîneur (6) lorsqu'il repose avec sa zone de mise en prise (26, 27) sur le rail de verrouillage (111, 112), sans être enclenché dans une ouverture de verrouillage (111), de sorte que l'élément de verrouillage (2) peut être entraîné par l'entraîneur (6) lors d'un déplacement du châssis de siège (G) dans la direction longitudinale du rail (L), jusqu'à ce qu'il s'enclenche dans au moins un site de verrouillage (111).

29. Siège de véhicule automobile selon l'une quelconque des revendications précédentes, **caractérisé en ce que** les moyens de réglage (1) sont constitués de matière plastique.

30. Siège de véhicule automobile selon l'une quelconque des revendications précédentes, **caractérisé en ce que** les moyens de réglage (1) sont guidés en se déplaçant longitudinalement sur une glissière (110) en matière plastique.

31. Siège de véhicule automobile selon l'une quelconque des revendications précédentes, **caractérisé en ce que** le dispositif de blocage (5) forme une contre-butée (54), qui, lors du déplacement du châssis de siège (G) dans la position de mémoire, entre en prise avec une butée (24a, 24b) du dispositif mémoire.

32. Siège de véhicule automobile selon l'une quelconque des revendications précédentes, **caractérisé en ce que** les sites de verrouillage (111) sont prévus dans ou sur un rail de guidage (101) du dispositif de guidage longitudinal de rail (101, 102), devant être fixé sur la carrosserie.
